# EUROPEAN PATENT APPLICATION

(11) **EP 1 318 517 A2**
(43) Date of publication of application: **11.06.2003**
(21) Application number: 02027318.1
(22) Date of filing: 06.12.2002
(51) Int. Cl.: G11B 20/00, G11B 20/10, G11B 20/12

(54) **Data recording medium, reproduction apparatus; recording apparatus, reproducing method, recording method, computer-readable recorded medium in which reproducing program is recorded, and computer-readable recorded medium in which recording program is recorded**

(30) Priority: 07.12.2001 JP 2001375042; 26.12.2001 JP 2001395106
(71) Applicant: Pioneer Corporation, Meguro-ku, Tokyo (JP)
(72) Inventor: Terao, Kyoichi, Tokorozawa-shi, Saitama-ken (JP); Namiki, Tsuyoshi, Tokorozawa-shi, Saitama-ken (JP); Ajima, Kosuke, Tokorozawa-shi, Saitama-ken (JP); Suzuki, Toshio, Tokorozawa-shi, Saitama-ken (JP); Moriyama, Yoshiaki, Tokorozawa-shi, Saitama-ken (JP)
(74) Representative: Reinhard - Skuhra - Weise & Partner

(57) **Abstract**

An optical disc 100 is constituted by a recording region 104 for recording contents data, a readout region 105, and a protect region 106 for recording copyright data of the contents data in this order from an inside. Access cannot be obtained to a groove track outside the readout region 105 except that legal reproduction and recording is performed, and the groove track records a part of contents key data used for encrypting and decoding contents data.

## Description

### BACKGROUND OF THE INVENTION

### 1. Field of the Invention

The present invention relates to a technical field for recording contents data having a copyright, and particularly, to a technical field for preventing contents data legally recorded on a recording medium from being illicitly duplicated and widely distributed.

### 2. Description of the Relates Art

In recent years, video data and music data have been digitized with development of digital technology. Video data and music data (hereinafter, referred to as contents data), which are digital signals with protected copyrights, have been generally provided via satellite broadcast, the Internet, and so on.

Meanwhile, digitized video data and music data have been recently recorded on a recording medium such as a DVD (Digital Versatile Disc) and a VTR (Video Tape Recording apparatus) by digital signals.

Under such circumstances, contents data protected by copyright can be illicitly duplicated without deterioration in picture quality and sound quality as compared with contents data provided by a data provider.

In general, commercial DVDs for storing (recording) movies and music record contents data such as video and audio after encryption in order to protect copyrighted products from being illicitly duplicated, that is, to protect the copyrights.

However, in a conventional reproducing method of reproducing copyrighted contents data recorded on a DVD, by performing a legal moving operation and a backup operation on contents data, it has been possible to perform unauthorized duplication, that is, reproduction of illicitly recorded contents data (hereinafter, referred to as unauthorized reproduction).

Normally, in a DVD, encrypted contents data and disc manufacturing data, that is, interpretation control data are recorded. The interpretation control data is generated based on identification data inherent to the DVD and interprets the encrypted contents data. When the contents data is reproduced, the interpretation control data is read to decode and reproduce the contents data.

Therefore, in the case of a conventional DVD reproduction apparatus, when encrypted contents data is interpreted, it is judged whether identification data recorded in the interpretation control data region agrees with identification data held by a DVD to be reproduced. When the pieces of identification data agree with each other, encrypted contents data is interpreted and reproduced.

Hence, in a conventional DVD recording and reproduction device, when contents data is copied, copying methods such as moving and restoration of contents data have made it possible to generate a plurality of pieces of contents data from contents data having one copyright, resulting in illicit recording (hereinafter, unauthorized recording) and illicit reproduction.

### SUMMARY OF THE INVENTION

An object of the present invention is to provide a recording medium in which data is recorded and a device records and reproduces data so that a plurality of contents data cannot be generated from one contents data, that is, so that unauthorized reproduction can be prevented on illicitly recorded contents data.
(1) The above object of present invention can be achieved by a data recording medium of the present invention. The data recording medium is provided with: a reproduction data region for recording reproduction data to be legally reproduced from the data recording medium; and a reproduction auxiliary data region for recording reproduction auxiliary data, which is retrieved based on medium identification data for identifying the data recording medium and identification data of the reproduction data to be legally reproduced and which is used for reproducing the reproduction data when the data recording medium is reproduced.
   With this configuration, in case where the reproduction data is illicitly recorded on the data recording medium and reproduction data is reproduced, if the reproduction auxiliary data is retrieved only based on legal identification data of the reproduction data and legal medium identification data, and the reproduction control of the reproduction data is performed based on the retrieved reproduction auxiliary data, it is not possible to retrieve the reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the reproduction auxiliary data is retrieved based on legal identification data of the reproduction data and legal medium identification data if it is made to perform the reproduction control as mentioned above. Accordingly, it is possible to perform the reproduction control of the reproduction data by the reproduction auxiliary data.
   Therefore, only in case where legally recorded reproduction data is reproduced, it is possible to protect copyrighted reproduction data because the reproduction data can be reproduced
(2) In one aspect of the present invention, the data recording medium is further provided with; the reproduction auxiliary data region is a region for recording the reproduction auxiliary data which is retrieved by generating based on the medium identification data for identifying the data recording medium and the identification data of the reproduction data to be legally reproduced.
   With this configuration, in case where the reproduction data is illicitly recorded on the data recording medium and reproduction data is reproduced, if reproduction auxiliary data is generated based on the identification data of the reproduction data and the medium identification data, and the reproduction control of the reproduction data is performed only when the generated reproduction auxiliary data is in agreement with the reproduction auxiliary data recorded on a reproduction auxiliary data region, the generated reproduction auxiliary data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, if it is made to perform the reproduction control as mentioned above, because the reproduction auxiliary data is retrieved based on legal identification data of the reproduction data and legal medium identification data, and the generated reproduction auxiliary data is in agreement with the recorded reproduction auxiliary data, it is possible to reproduce the reproduction data.
   Therefore, in order to reproduce reproduction data, it is necessary to generate the reproduction auxiliary data based on legal identification data of the reproduction data and legal medium identification. Because the reproduction data can be reproduced only in case where the reproduction auxiliary data is generated based on legally recorded the identification data of the reproduction data and the medium identification, it is possible to protect copyrighted reproduction data
(3) In one aspect of the present invention, the data recording medium is further provided with; the reproduction auxiliary data region is a region for recording the reproduction auxiliary data which is retrieved by performing readout control using readout control data generated based on the medium identification data and the identification data of the reproduction data when the data recording medium is reproduced.
   With this configuration, in case where the reproduction data is illicitly recorded on the data recording medium and reproduction data is reproduced, if readout control data is generated based on the legal identification data of the reproduction data and the legal medium identification data, and the reproduction control of the reproduction data is performed based on the reproduction auxiliary data retrieved only when the generated readout control data is in agreement with the readout control data recorded on a reproduction auxiliary data region, the generated readout control data is not in agreement with the recorded readout control data because the identification data of the reproduction data and the medium identification data become unauthorized. Accordingly, because it is not possible to read the reproduction auxiliary data from the data recording medium, the reproduction data cannot be reproduced.
   On the other hand, in case where reproduction data is reproduced and reproduction data is legally recorded, if it is made to perform the reproduction control as mentioned above, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protected with simple methods because it is not possible to reproduce the reproduction data only by retrieving these data.
(4) In one aspect of the present invention, the data recording medium is further provided with; the reproduction auxiliary data region is a region for recording at least a part of the reproduction auxiliary data which is different for each data recording medium and each the reproduction data.
   With this configuration, if the reproduction auxiliary data is retrieved by generating based on the retrieved part of the reproduction auxiliary data after retrieving the part of the reproduction auxiliary data from the data recording medium, it is not necessary to record all pieces of reproduction auxiliary data, which is used for reproducing the reproduction data, on the data recording medium. Further, when the reproduction data is reproduced, it is possible to retrieve the reproduction auxiliary data based on the part of the reproduction auxiliary data recorded in the data recording medium.
   Moreover, if the reproduction auxiliary data is retrieved only based on the identification data of the reproduction data recorded legal and the medium identification data recorded legal, it is not possible to retrieve the reproduction auxiliary data because the identification data of the reproduction data and the medium identification data become unauthorized. On the other hand, the reproduction auxiliary data is retrieved based on legal identification data of the reproduction data and legal medium identification data if the reproduction auxiliary data is retrieved as mentioned above.
   Therefore, because it is possible to retrieve the reproduction auxiliary data easily and to prevent retrieving the reproduction auxiliary data by some unauthorized methods, copyrighted reproduction data can be protect with simple operations.
(5) In one aspect of the present invention, the data recording medium is further provided with; the reproduction auxiliary data region is a region for recording the readout control data generated based on the medium identification data and data identification data of the reproduction.
   With this configuration, when the reproduction is reproduced, if the reproduction auxiliary data recorded on the reproduction auxiliary data region is retrieved only in case where readout control data which is generated based on legal identification data of the reproduction data and legal medium identification data is in agreement with the readout control data recorded on the reproduction auxiliary data region, it is easy to retrieve legal readout control data because the readout data recorded on the reproduction auxiliary data region is read only, and it is possible to control readout of the recorded reproduction auxiliary data only by comparing the generated readout control data and the recorded readout control data. Therefore, because it is possible to control the reproduction of the reproduction data, copyrighted reproduction data can be protected with simple methods.
(6) In one aspect of the present invention, in case where the reproduction auxiliary data region is a region for recording the part reproduction auxiliary data which is different for each data recording medium and each the reproduction data, the data recording medium is further provided with; the reproduction data region is a region for recording reproduction auxiliary encryption data is encrypted based on the part reproduction auxiliary data and decoded based on the part reproduction auxiliary data when the data recording medium is reproduced.
   With this configuration, it is not necessary that all pieces of reproduction auxiliary data used for reproducing the reproduction data is recorded on the data recording medium. Further, when the reproduction data is reproduced, if the part reproduction auxiliary data recorded in the data recording medium is retrieved, and encrypted reproduction auxiliary data recorded on the data recording medium is decoded by the retrieved part reproduction auxiliary data recorded, it is possible to retrieve the reproduction auxiliary data easily and to protect retrieving the reproduction auxiliary data by some unauthorized methods. Therefore, copyrighted reproduction data can be protected with simple methods.
(7) In one aspect of the present invention, the data recording medium is further provided with; the reproduction data region is a region for recording the reproduction auxiliary encryption data is encrypted based on any one of the medium identification data, identification data of a legal recording apparatus for recording the reproduction data on the data recording medium, and identification data of a legal reproduction apparatus for reproducing the data recording medium with the part reproduction auxiliary data.
   With this configuration, when the reproduction data is reproduced by using decoded reproduction auxiliary data, if the encrypted reproduction auxiliary encryption data is decoded based on any one of the medium identification data, the identification data of a legal recording apparatus, and the identification data of a legal reproduction apparatus, it is possible to retrieve the reproduction auxiliary data only in case where the encrypted reproduction auxiliary data is recorded in legal data recording medium by a legal recording apparatus and is reproduced from legal data recording medium by a legal reproduction apparatus. Therefore, unauthorized recording and reproduction can be prevented.
(8) In one aspect of the present invention, the data recording medium is further provided with; the reproduction data region is a region for recording the reproduction data which is encrypted by a predetermined method and is recorded as reproduction encryption data.
   With this configuration, when the reproduction data is reproduced, if encrypted reproduction data is decoded based on the reproduction auxiliary data, it is necessary to retrieve legal reproduction auxiliary data recorded on a reproduction auxiliary data region.
   Accordingly, even when the reproduction data is retrieved by some unauthorized methods, it is not possible to reproduce only the reproduction data retrieved from the data recording medium because the reproduction data is encrypted. Therefore, copyrighted reproduction data can be protected with simple methods.
(9) In one aspect of the present invention, the data recording medium is further provided with; the reproduction auxiliary data region is a region for recording the reproduction auxiliary data which is used for decoding the reproduction data when the reproduction encryption data is reproduced.
   With this configuration, when the reproduction data is reproduced, it is necessary to retrieve legal reproduction auxiliary data recorded on a reproduction auxiliary data region for decoding the encrypted reproduction data.
   Therefore, even when the reproduction data is retrieved by some unauthorized methods, because it is not possible to reproduce only the reproduction data retrieved from the data recording medium, copyrighted reproduction data can be protected with simple methods.
(10) In one aspect of the present invention, the data recording medium is further provided with; the reproduction data region is a region for recording the reproduction data which is copyrighted data.
   With this configuration, because reproduction data is copyrighted, it is possible to reproduce the reproduction data only when legally recorded and copyrighted reproduction data is reproduced. Therefore, copyrighted reproduction data can be protected with simple methods.
(11) In one aspect of the present invention, the data recording medium is further provided with; the reproduction auxiliary data region is formed on a region which is not reached by unauthorized detecting device.
   With this configuration, because it is not possible to detect the reproduction auxiliary data region by unauthorized detecting device, the reproduction auxiliary data cannot be retrieved from the data recording medium when the reproduction data is reproduced illegally.
   Therefore, because it is possible to retrieve the reproduction data by retrieving the legal reproduction auxiliary data, copyrighted reproduction data can be protected with simple methods.
(12) The above object of present invention can be achieved by a reproduction apparatus of the present invention. The reproduction apparatus is a apparatus for reproducing reproduction data recorded on an data recording medium providing with a reproduction data region for recording the reproduction data to be legally reproduced from the data recording medium and a reproduction auxiliary data region for recording reproduction auxiliary data, which is retrieved based on medium identification data for identifying the data recording medium and identification data of the reproduction data to be legally reproduced and which is used for reproducing the reproduction data when the recording medium is reproduced. The reproduction apparatus is provided with: a identification data retrieving device for retrieving the identification data of reproduction data and the medium identification data of the data recording medium reproduced by the reproduction apparatus; a generating device for generating readout control data for controlling readout of the reproduction data based on the acquired identification data of reproduction data and the acquired medium identification data; a reproduction auxiliary data retrieving device for retrieving the reproduction auxiliary data recorded on a reproduction auxiliary region in the data recording medium; and a reproduction control device for controlling reproduction of the reproduction data recorded on the data recording medium based on the generated readout control data and the retrieved reproduction auxiliary data.
   With this configuration, in case where the reproduction data is illicitly recorded on the data recording medium and the reproduction data is reproduced, if the reproduction control of the reproduction data is performed based on the legal recorded reproduction auxiliary data and on legal generated readout control data, it is not possible to retrieve the legal recorded reproduction auxiliary data and to generate the legal readout control data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the generated readout control data is legal and the legal recorded reproduction auxiliary data is retrieved if it is made to perform the reproduction control as mentioned above. Accordingly, it is possible to perform the reproduction control of the reproduction data by the reproduction auxiliary data.
   Therefore, only in case where legally recorded reproduction data is reproduced, copyrighted reproduction data can be protect with simple operations because the reproduction data can be reproduced
(13) In one aspect of the present invention, in case where the reproduction auxiliary data region is a region for recording the reproduction auxiliary data which is generated based on the medium identification data and the identification data of reproduction data when the reproduction data is recorded on the data recording medium, the reproduction apparatus is further provided with; a comparing device for comparing the readout control data generated by the generating device and the reproduction auxiliary data retrieved from the data recording medium by the reproduction auxiliary data retrieving device; and a control device for controlling reproduction of the reproduction data recorded on the data recording medium only when the generated readout control data and the retrieved reproduction auxiliary data of the data recording medium are in agreement.
   With this configuration, in case where the reproduction data is illicitly recorded on the data recording medium and reproduction data is reproduced, the generated readout data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, because the readout control data is retrieved based on legal identification data of the reproduction data and legal medium identification data, and the generated readout control data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protect with simple operations
(14) In one aspect of the present invention, in case where the reproduction auxiliary data region is a region for recording at least a part of the reproduction auxiliary data and readout control data, which is generated based on the medium identification for identifying the data recording medium and identification data of the reproduction data to be legally reproduced and which is controlling readout of the reproduction auxiliary data, the reproduction apparatus is further provided with; a readout control data retrieving device for retrieving record readout control data recorded on the reproduction auxiliary data region in the data recording medium reproduced by the reproduction apparatus; and a comparing device for comparing the retrieved record readout control data and generation readout control data which is the readout control data generated by the generating device, wherein the reproduction auxiliary data retrieving device retrieves the reproduction auxiliary data from the data recording medium when the generation readout control data and the record readout control data are in agreement, and the reproduction control device controls reproduction of the reproduction data recorded on the data recording medium based on the retrieved reproduction auxiliary data.
   With this configuration, in case where the reproduction data is illicitly recorded on the data recording medium and reproduction data is reproduced, the generated readout control data is not in agreement with the recorded readout control data because the readout control data generated based on illegal identification data of the reproduction data and illegal medium identification data. Accordingly, it is not possible to read the reproduction auxiliary data from the data recording medium, and the reproduction data cannot be reproduced.
   On the other hand, in case where reproduction data is reproduced and reproduction data is legally recorded, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protect with simple operations because it is not possible to reproduce the reproduction data only by retrieving these data.
(15) In one aspect of the present invention, in case where the reproduction auxiliary data region is a region for recording part reproduction auxiliary data which is a part of the reproduction auxiliary data, the reproduction apparatus is further provided with; the reproduction auxiliary data retrieving device retrieves the part reproduction auxiliary data and the reproduction auxiliary data by generating based on the retrieved part reproduction auxiliary data after the part of the reproduction auxiliary data.
   With this configuration, it is not necessary to record all pieces of reproduction auxiliary data, which is used for reproducing the reproduction data, on the data recording medium. Further, when the reproduction data is reproduced, it is possible to retrieve the reproduction auxiliary data based on the part reproduction auxiliary data recorded in the data recording medium.
   Therefore, because it is possible to retrieve the reproduction auxiliary data easily and to prevent retrieving the reproduction auxiliary data by some unauthorized methods, copyrighted reproduction data can be protected with simple operations.
(16) In one aspect of the present invention, in case where the reproduction data region is a region for recording the reproduction auxiliary data encrypted by the part reproduction auxiliary data, the reproduction apparatus is further provided with; the reproduction auxiliary data retrieving device retrieves reproduction auxiliary encryption data, which is the encrypted reproduction auxiliary data, from the data recording medium and decodes the reproduction auxiliary encryption data based on the retrieved part reproduction auxiliary data for generating the reproduction auxiliary data.
   With this configuration, it is not necessary that all pieces of reproduction auxiliary data used for reproducing the reproduction data is recorded on the data recording medium. Further, when the reproduction data is reproduced, it is possible to decode the encrypted reproduction auxiliary data based on the part reproduction auxiliary data recorded in the data recording medium.
   Therefore, copyrighted reproduction data can be protect with simple operations, because it is possible to retrieve the reproduction auxiliary data easily and to protect retrieving the reproduction auxiliary data by some unauthorized methods,
(17) In one aspect of the present invention, in case where the reproduction data region is a region for recording the reproduction auxiliary data which is encrypted, the reproduction apparatus is further provided with; the reproduction auxiliary data retrieving device generates the reproduction auxiliary data by decoding the reproduction auxiliary encryption data based on the part reproduction auxiliary data and at least one of the medium identification data and the identification data of the reproduction apparatus.
   With this configuration, when the reproduction data is reproduced, it is not possible to retrieve the reproduction auxiliary data recorded from illegal data recording medium or to read the reproduction auxiliary data by illegal reproduction apparatus. Therefore, unauthorized recording and reproduction can be prevented.
(18) In one aspect of the present invention, in case where the reproducing data region is a region for recording the reproduction encryption data which is the reproduction data encrypted by using a predetermined method, the reproduction apparatus is further provided with; the reproduction control device comprises a decoding device for decoding the reproduction encryption data based on the reproduction auxiliary data retrieved by the reproduction auxiliary data retrieving device.
   With this configuration, when reproduction data is reproduced, it is necessary to retrieve legal reproduction auxiliary data recorded on a reproduction auxiliary data region. Even when the reproduction data is retrieved by some unauthorized methods, it is not possible to reproduce only the reproduction data retrieved from the data recording medium because the reproduction data is encrypted. Therefore, copyrighted reproduction data can be protected with simple operations.
(19) In one aspect of the present invention, the reproduction apparatus is further provided with; the reproduction auxiliary data retrieving device retrieves the reproduction auxiliary data recorded on the reproduction auxiliary region only when the reproduction data is legally recorded on the data recording medium.
   With this configuration, because the recorded reproduction auxiliary data is retrieved only when reproduction data is legally recorded on a recording medium, it is not possible to retrieve the recorded reproduction auxiliary data when reproduction data is illegally recorded. Therefore, copyrighted reproduction data can be protected with simple operations.
(20) The above object of present invention can be achieved by a recording apparatus of the present invention. The recording apparatus is a apparatus for recording reproduction data recorded on an data recording medium providing with a reproduction data region for recording the reproduction data to be legally reproduced from the data recording medium and a reproduction auxiliary data region for recording reproduction auxiliary data which is used for reproducing the reproduction data when the recording medium is reproduced. The recording apparatus is provided with: a first identification data acquiring device for acquiring the identification data of the reproduction data which is recorded in the data recording; a second identification data acquiring device for acquiring the identification data of the data recording medium which is reproduced; a reproduction data acquiring device for acquiring the reproduction data; a reproduction auxiliary data acquiring device for acquiring reproduction auxiliary data based on the acquired medium identification data and the acquired identification data of the reproduction data; and a recording device for recording the acquired reproduction data on the reproduction data region, the acquired reproduction auxiliary data on the reproduction auxiliary data region, and the acquired medium identification data and the acquired identification data of the reproduction data on a region in the data recording medium.
   With this configuration, in case where the reproduction data is illicitly recorded on the data recording medium and the reproduction data is reproduced, if the reproduction auxiliary data is retrieved only based on the identification data of the reproduction data recorded legal and the medium identification data recorded legal, and the reproduction control of the reproduction data is performed based on the retrieved reproduction auxiliary data, it is not possible to retrieve the reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the reproduction auxiliary data is retrieved based on legal identification data of the reproduction data and legal medium identification data if it is made to perform the reproduction control as mentioned above. Accordingly, it is possible to perform the reproduction control of the reproduction data by the reproduction auxiliary data.
   Therefore, copyrighted reproduction data can be protected with simple methods because the reproduction data can be reproduced only in case where legally recorded reproduction data is reproduced.
(21) In one aspect of the present invention, the recording apparatus is further provided with; the reproduction auxiliary data retrieving device comprises a generating device for generating the reproduction auxiliary data based on the acquired identification data of the reproduction data and the acquired medium identification data, and the recording device records the generated reproduction auxiliary data on the reproduction auxiliary data region.
   With this configuration, in case where the reproduction data is illicitly recorded on the data recording medium and reproduction data is reproduced, if reproduction auxiliary data is generated based on the identification data of the reproduction data recorded legal and the medium identification data recorded legal, and the reproduction control of the reproduction data is performed only when the generated reproduction auxiliary data is in agreement with the reproduction auxiliary data recorded on a reproduction auxiliary data region, the generated reproduction auxiliary data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, if it is made to perform the reproduction control as mentioned above, because the reproduction auxiliary data is retrieved based on legal identification data of the reproduction data and legal medium identification data, and the generated reproduction auxiliary data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protected with simple methods.
(22) In one aspect of the present invention, the recording apparatus is further provided with; a generating device for generating the readout control data, which is a data for controlling reading the reproduction auxiliary data when the recording medium is reproduced, based on the acquired identification data of reproduction data and the acquired medium identification data, and wherein the recording device records the readout control data on a region in the data recording medium together with the reproduction data and the reproduction auxiliary data.
   With this configuration, in case where the reproduction data is illicitly recorded on the data recording medium and reproduction data is reproduced, if the readout control data is generated based on the identification data of the reproduction data recorded legal and the medium identification data recorded legal, and the reproduction control of the reproduction data is performed based on the reproduction auxiliary data retrieved only when the generated readout control data is in agreement with the readout control data recorded on a reproduction auxiliary data region, the generated readout control data is not in agreement with the recorded readout control data because the identification data of the reproduction data and the medium identification data become unauthorized. Accordingly, because it is not possible to read the reproduction auxiliary data from the data recording medium, the reproduction data cannot be reproduced.
   On the other hand, in case where reproduction data is reproduced and reproduction data is legally recorded, if it is made to perform the reproduction control as mentioned above, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protected with simple methods because it is not possible to reproduce the reproduction data only by retrieving these data.
(23) In one aspect of the present invention, the recording apparatus is further provided with; the recording device records the part reproduction auxiliary data which is part of the reproduction auxiliary data and the reproduction auxiliary data encrypted based on the part reproduction data on a region in the data recording medium.
   With this configuration, when the reproduction data is reproduced, if the reproduction auxiliary data is retrieved based on the part reproduction auxiliary data recorded in the data recording medium, it is not necessary to record all pieces of reproduction auxiliary data, which is used for reproducing the reproduction data, on the data recording medium.
   Therefore, because it is possible to retrieve the reproduction auxiliary data easily and to prevent retrieving the reproduction auxiliary data by some unauthorized methods, copyrighted reproduction data can be protected with simple operations.
(24) In one aspect of the present invention, the recording apparatus is further provided with; the recording device records the reproduction auxiliary encryption data encrypted based on the part reproduction auxiliary data and at least one of the medium identification data and identification data of a legal reproduction apparatus for reproducing the data recording medium.
   With this configuration, when the reproduction data is reproduced, if the reproduction auxiliary encryption data is decoded only in case where the recorded reproduction data which is recorded on legal data recording medium by a legal reproduction apparatus, it is not possible to retrieve the reproduction auxiliary data recorded from illegal data recording medium or to read the reproduction auxiliary data by reproduction apparatus. Therefore, unauthorized recording and reproduction can be prevented.
(25) In one aspect of the present invention, the recording apparatus is further provided with; the recording device comprises an encryption device for encrypting the acquired reproduction data by a predetermined method.
   With this configuration, when reproduction data is reproduced, it is necessary to retrieve legal reproduction auxiliary data recorded on a reproduction auxiliary data region. Even when the reproduction data is retrieved by some unauthorized methods, it is not possible to reproduce only the reproduction data retrieved from the data recording medium because the reproduction data is encrypted. Therefore, copyrighted reproduction data can be protected with simple operations.
(26) The above object of present invention can be achieved by a reproducing method of the present invention. The reproducing method is a method for reproducing reproduction data recorded on an data recording medium providing with a reproduction data region for recording the reproduction data to be legally reproduced from the data recording medium and a reproduction auxiliary data region for recording reproduction auxiliary data, which is retrieved based on medium identification data for identifying the data recording medium and identification data of the reproduction data to be legally reproduced and which is used for reproducing the reproduction data when the recording medium is reproduced. The reproducing method is provided with; a identification data acquiring process of acquiring the identification data of reproduction data reproduced by the reproduction apparatus and the medium identification data of the data recording medium reproduced by the reproduction apparatus; a generating process of generating readout control data for controlling readout of the reproduction data based on the acquired identification data of reproduction data and the acquired medium identification data; a reproduction auxiliary data retrieving process of retrieving the reproduction auxiliary data recorded on a reproduction auxiliary region in the data recording medium; and a reproduction process of reproducing of the reproduction data recorded on the data recording medium based on the generated readout control data and the retrieved reproduction auxiliary data.
   With this configuration, in case where the reproduction data is illicitly recorded on the data recording medium and the reproduction data is reproduced, if the reproduction control of the reproduction data is performed based on the legal recorded reproduction auxiliary data and on legal generated readout control data, it is not possible to retrieve the legal recorded reproduction auxiliary data and to generate the legal readout control data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the generated readout control data is legal and the legal recorded reproduction auxiliary data is retrieved if it is made to perform the reproduction control as mentioned above. Accordingly, it is possible to perform the reproduction control of the reproduction data by the reproduction auxiliary data.
   Therefore, only in case where legally recorded reproduction data is reproduced, copyrighted reproduction data can be protect with simple operations because the reproduction data can be reproduced
(27) In one aspect of the present invention, in case where the reproduction auxiliary data region is a region for recording the reproduction auxiliary data which is generated based on the medium identification data and the identification data of reproduction data when the reproduction data is recorded on the data recording medium, the reproducing method is further provided with; a comparing process of comparing the readout control data generated by the generating process and the reproduction auxiliary data retrieved from the data recording medium by the reproduction auxiliary data retrieving process; and a data reproduction process of controlling reproduction of the reproduction data recorded on the data recording medium only when the generated readout control data and the retrieved reproduction auxiliary data of the data recording medium are in agreement.
   With this configuration, in case where the reproduction data is illicitly recorded on the data recording medium and reproduction data is reproduced, the generated readout data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, because the readout control data is retrieved based on legal identification data of the reproduction data and legal medium identification data, and the generated readout control data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protect with simple operations
(28) In one aspect of the present invention, in case where the reproduction auxiliary data region is a region for recording at least a part of the reproduction auxiliary data and readout control data, which is generated based on the medium identification for identifying the data recording medium and identification data of the reproduction data to be legally reproduced and which is controlling readout of the reproduction auxiliary data, the reproducing method is further provided with; a readout control data retrieving process of retrieving record readout control data recorded on the reproduction auxiliary data region in the data recording medium reproduced by a reproduction apparatus; and a comparing process of comparing the retrieved record readout control data and generation readout control data which is the readout control data generated by the generating process, wherein in the reproduction auxiliary data retrieving process, the reproduction auxiliary data is retrieved from the data recording medium when the generation readout control data and the record readout control data are in agreement, and the reproduction control process controls reproduction of the reproduction data recorded on the data recording medium based on the retrieved reproduction auxiliary data.
   With this configuration, in case where the reproduction data is illicitly recorded on the data recording medium and reproduction data is reproduced, the generated readout control data is not in agreement with the recorded readout control data because the readout control data generated based on illegal identification data of the reproduction data and illegal medium identification data. Accordingly, it is not possible to read the reproduction auxiliary data from the data recording medium, and the reproduction data cannot be reproduced.
   On the other hand, in case where reproduction data is reproduced and reproduction data is legally recorded, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protect with simple operations because it is not possible to reproduce the reproduction data only by retrieving these data.
(29) The above object of present invention can be achieved by a recording method of the present invention. The recording method is a method for recording reproduction data recorded on an data recording medium providing with a reproduction data region for recording the reproduction data to be legally reproduced from the data recording medium and a reproduction auxiliary data region for recording reproduction auxiliary data which is used for reproducing the reproduction data when the recording medium is reproduced, the recording apparatus is provided with: a first identification data acquiring process of acquiring the identification data of the reproduction data which is recorded in the data recording; a second identification data acquiring process of acquiring the identification data of the data recording medium which is reproduced; a reproduction data acquiring process of acquiring the reproduction data; a reproduction auxiliary data acquiring process of acquiring reproduction auxiliary data based on the acquired medium identification data and the acquired identification data of the reproduction data; and a recording process of recording the acquired reproduction data on the reproduction data region, the acquired reproduction auxiliary data on the reproduction auxiliary data region, and the acquired medium identification data and the acquired identification data of the reproduction data on a region in the data recording medium.
   With this configuration, in case where the reproduction data is illicitly recorded on the data recording medium and the reproduction data is reproduced, if the reproduction auxiliary data is retrieved only based on the identification data of the reproduction data recorded legal and the medium identification data recorded legal, and the reproduction control of the reproduction data is performed based on the retrieved reproduction auxiliary data, it is not possible to retrieve the reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the reproduction auxiliary data is retrieved based on legal identification data of the reproduction data and legal medium identification data if it is made to perform the reproduction control as mentioned above. Accordingly, it is possible to perform the reproduction control of the reproduction data by the reproduction auxiliary data.
   Therefore, copyrighted reproduction data can be protected with simple methods because the reproduction data can be reproduced only in case where legally recorded reproduction data is reproduced.
(30) In one aspect of the present invention, the recording method is further provided with; the reproduction auxiliary data acquiring process comprises a generating process of generating the reproduction auxiliary data based on the acquired identification data of the reproduction data and the acquired medium identification data, and in the recording process, the generated reproduction auxiliary data is recorded on the reproduction auxiliary data region.
   With this configuration, in case where the reproduction data is illicitly recorded on the data recording medium and reproduction data is reproduced, if reproduction auxiliary data is generated based on the identification data of the reproduction data recorded legal and the medium identification data recorded legal, and the reproduction control of the reproduction data is performed only when the generated reproduction auxiliary data is in agreement with the reproduction auxiliary data recorded on a reproduction auxiliary data region, the generated reproduction auxiliary data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, if it is made to perform the reproduction control as mentioned above, because the reproduction auxiliary data is retrieved based on legal identification data of the reproduction data and legal medium identification data, and the generated reproduction auxiliary data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protected with simple methods.
(31) In one aspect of the present invention, the recording method is further provided with; a generating process of generating the readout control data, which is a data for controlling reading the reproduction auxiliary data when the recording medium is reproduced, based on the acquired identification data of reproduction data and the acquired medium identification data, and wherein in the recording process, the readout control data is recorded on a region in the data recording medium together with the reproduction data and the reproduction auxiliary data.
   With this configuration, in case where the reproduction data is illicitly recorded on the data recording medium and reproduction data is reproduced, if the readout control data is generated based on the identification data of the reproduction data recorded legal and the medium identification data recorded legal, and the reproduction control of the reproduction data is performed based on the reproduction auxiliary data retrieved only when the generated readout control data is in agreement with the readout control data recorded on a reproduction auxiliary data region, the generated readout control data is not in agreement with the recorded readout control data because the identification data of the reproduction data and the medium identification data become unauthorized. Accordingly, because it is not possible to read the reproduction auxiliary data from the data recording medium, the reproduction data cannot be reproduced.
   On the other hand, in case where reproduction data is reproduced and reproduction data is legally recorded, if it is made to perform the reproduction control as mentioned above, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protected with simple methods because it is not possible to reproduce the reproduction data only by retrieving these data.
(32) The above object of present invention can be achieved by a recording medium of the present invention. The recording medium is a recording medium wherein a reproduction program is recorded so as to be read by a computer, the computer included in a reproduction apparatus for reproducing reproduction data recorded on an data recording medium providing with a reproduction data region for recording the reproduction data to be legally reproduced from the data recording medium and a reproduction auxiliary data region for recording reproduction auxiliary data, which is retrieved based on medium identification data for identifying the data recording medium and identification data of the reproduction data to be legally reproduced and which is used for reproducing the reproduction data when the recording medium is reproduced, the program causing the computer to function as the identification data acquiring device for acquiring the identification data of reproduction data reproduced by the reproduction apparatus and the medium identification data of the data recording medium reproduced; a generating device for generating readout control data for controlling readout of the reproduction data based on the acquired identification data of reproduction data and the acquired medium identification data; a reproduction auxiliary data retrieving device for retrieving the reproduction auxiliary data recorded on a reproduction auxiliary region in the data recording medium; and a reproduction control device for controlling reproduction of the reproduction data recorded on the data recording medium based on the generated readout control data and the retrieved reproduction auxiliary data.
   With this configuration, in case where the reproduction data is illicitly recorded on the data recording medium and the reproduction data is reproduced, if the reproduction control of the reproduction data is performed based on the legal recorded reproduction auxiliary data and on legal generated readout control data, it is not possible to retrieve the legal recorded reproduction auxiliary data and to generate the legal readout control data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the generated readout control data is legal and the legal recorded reproduction auxiliary data is retrieved if it is made to perform the reproduction control as mentioned above. Accordingly, it is possible to perform the reproduction control of the reproduction data by the reproduction auxiliary data.
   Therefore, only in case where legally recorded reproduction data is reproduced, copyrighted reproduction data can be protect with simple operations because the reproduction data can be reproduced
(33) In one aspect of the present invention, in case where the reproduction auxiliary data region is a region for recording the reproduction auxiliary data which is generated based on the medium identification data and the identification data of reproduction data when the reproduction data is recorded on the data recording medium, wherein the program further causes the computer to function as: the reproducing control device comprises: a comparing device for comparing the readout control data generated by the generating device and the reproduction auxiliary data retrieved from the data recording medium by the reproduction auxiliary data retrieving device; and a control device for controlling reproduction of the reproduction data recorded on the data recording medium only when the generated readout control data and the retrieved reproduction auxiliary data of the data recording medium are in agreement.
   With this configuration, in case where the reproduction data is illicitly recorded on the data recording medium and reproduction data is reproduced, the generated readout data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, because the readout control data is retrieved based on legal identification data of the reproduction data and legal medium identification data, and the generated readout control data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protect with simple operations
(34) In one aspect of the present invention, in case where the reproduction auxiliary data region is a region for recording at least a part of the reproduction auxiliary data and readout control data, which is generated based on the medium identification for identifying the data recording medium and identification data of the reproduction data to be legally reproduced and which is controlling readout of the reproduction auxiliary data, wherein the program further causes the computer to function as: a readout control data retrieving device for retrieving record readout control data recorded on the reproduction auxiliary data region in the data recording medium reproduced by the reproduction apparatus; a comparing device for comparing the retrieved record readout control data and generation readout control data which is the readout control data generated by the generating device; the reproduction auxiliary data retrieving device for retrieving the reproduction auxiliary data from the data recording medium when the generation readout control data and the record readout control data are in agreement; and the reproduction control device for controlling reproduction of the reproduction data recorded on the data recording medium based on the retrieved reproduction auxiliary data.
   With this configuration, in case where the reproduction data is illicitly recorded on the data recording medium and reproduction data is reproduced, the generated readout control data is not in agreement with the recorded readout control data because the readout control data generated based on illegal identification data of the reproduction data and illegal medium identification data. Accordingly, it is not possible to read the reproduction auxiliary data from the data recording medium, and the reproduction data cannot be reproduced.
   On the other hand, in case where reproduction data is reproduced and reproduction data is legally recorded, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.
   Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protect with simple operations because it is not possible to reproduce the reproduction data only by retrieving these data.
(35) The above object of present invention can be achieved by a recording medium of the present invention. The recording medium is a recording medium wherein a recording program is recorded so as to be read by a computer, the computer included in a recording apparatus for recording reproduction data recorded on an data recording medium providing with a reproduction data region for recording the reproduction data to be legally reproduced from the data recording medium and a reproduction auxiliary data region for recording reproduction auxiliary data which is used for reproducing the reproduction data when the recording medium is reproduced, the program causing the computer to function as: a first identification data acquiring device for acquiring the identification data of the reproduction data which is recorded in the data recording; a second identification data acquiring device for acquiring the identification data of the data recording medium which is reproduced; a reproduction data acquiring device for acquiring the reproduction data; a reproduction auxiliary data acquiring device for acquiring reproduction auxiliary data based on the acquired medium identification data and the acquired identification data of the reproduction data; and a recording device for recording the acquired reproduction data on the reproduction data region, the acquired reproduction auxiliary data on the reproduction auxiliary data region, and the acquired medium identification data and the acquired identification data of the reproduction data on a region in the data recording medium.
   With this configuration, in case where the reproduction data is illicitly recorded on the data recording medium and the reproduction data is reproduced, if the reproduction auxiliary data is retrieved only based on the identification data of the reproduction data recorded legal and the medium identification data recorded legal, and the reproduction control of the reproduction data is performed based on the retrieved reproduction auxiliary data, it is not possible to retrieve the reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, the reproduction auxiliary data is retrieved based on legal identification data of the reproduction data and legal medium identification data if it is made to perform the reproduction control as mentioned above. Accordingly, it is possible to perform the reproduction control of the reproduction data by the reproduction auxiliary data.
   Therefore, copyrighted reproduction data can be protected with simple methods because the reproduction data can be reproduced only in case where legally recorded reproduction data is reproduced.
(36) In one aspect of the present invention, the program causing the computer to function as: the reproduction auxiliary data acquiring device for comprising a generating device for generating the reproduction auxiliary data based on the acquired identification data of the reproduction data and the acquired medium identification data, and the recording device for recording the generated reproduction auxiliary data on the reproduction auxiliary data region.
   With this configuration, in case where the reproduction data is illicitly recorded on the data recording medium and reproduction data is reproduced, if reproduction auxiliary data is generated based on the identification data of the reproduction data recorded legal and the medium identification data recorded legal, and the reproduction control of the reproduction data is performed only when the generated reproduction auxiliary data is in agreement with the reproduction auxiliary data recorded on a reproduction auxiliary data region, the generated reproduction auxiliary data is not in agreement with the recorded reproduction auxiliary data because the identification data of the reproduction data and the medium identification data become unauthorized. Accordingly, the reproduction data cannot be reproduced from the data recording medium.
   On the other hand, in case where reproduction data is reproduced and reproduction data is legally recorded, if it is made to perform the reproduction control as mentioned above, because the reproduction auxiliary data is retrieved based on legal identification data of the reproduction data and legal medium identification data, and the generated reproduction auxiliary data is in agreement with the recorded reproduction auxiliary data, it is possible to reproduce the reproduction data.
   Therefore, in order to reproduce reproduction data, it is necessary to retrieve legal identification data of the reproduction data and legal medium identification data recorded on the reproduction auxiliary data region. Because the reproduction data can be reproduced only in case where legally recorded the identification data of the reproduction data and the medium identification, copyrighted reproduction data can be protected with simple methods.
(37) In one aspect of the present invention, the program causing the computer to function as: a generating device for generating the readout control data, which is a data for controlling reading the reproduction auxiliary data when the recording medium is reproduced, based on the acquired identification data of reproduction data and the acquired medium identification data; and the recording device for recording the readout control data on a region in the data recording medium together with the reproduction data and the reproduction auxiliary data.

With this configuration, in case where the reproduction data is illicitly recorded on the data recording medium and reproduction data is reproduced, if the readout control data is generated based on the identification data of the reproduction data recorded legal and the medium identification data recorded legal, and the reproduction control of the reproduction data is performed based on the reproduction auxiliary data retrieved only when the generated readout control data is in agreement with the readout control data recorded on a reproduction auxiliary data region, the generated readout control data is not in agreement with the recorded readout control data because the identification data of the reproduction data and the medium identification data become unauthorized. Accordingly, because it is not possible to read the reproduction auxiliary data from the data recording medium, the reproduction data cannot be reproduced.

On the other hand, in case where reproduction data is reproduced and reproduction data is legally recorded, if it is made to perform the reproduction control as mentioned above, the generated readout control data is in agreement with the recorded readout control data because the generated readout control data is generated based on legal identification data of the reproduction data and legal medium identification data. Accordingly, because it is possible to retrieve the reproduction auxiliary data from the data recording medium, the reproduction data can be reproduced.

Therefore, in order to reproduce reproduction data, it is necessary to retrieve legal reproduction auxiliary data recorded on the reproduction auxiliary data region. Even when the identification data of the data reproduction and the medium identification data are retrieved by some unauthorized methods, copyrighted reproduction data can be protected with simple methods because it is not possible to reproduce the reproduction data only by retrieving these data.

### BRIEF DESCRIPTION OF THE DRAWINGS

FIG. 1 is a diagram showing a configuration of DVD-R of a recording medium according to the present invention;
FIG. 2 is a block diagram showing a configuration of a recording and reproduction device in the first embodiment of the present invention;
FIG. 3 is a diagram for explaining a problem of a conventional recording and reproducing method of protecting a copyright;
FIG. 4 is a structural diagram showing a conventional recording medium for recording copyrighted contents data;
FIG. 5 is a flowchart showing a retrieving operation of readout control data in the first embodiment;
FIG. 6 is a flowchart showing a recording operation for recording contents data in the first embodiment;
FIG. 7 is a flowchart showing a reproducing operation for reproducing contents data in the first embodiment;
FIG. 8 is a block diagram showing a configuration of a recording and reproduction device in the second embodiment of the present invention;
FIG. 9 is a flowchart showing a recording operation for recording contents data in the second embodiment;
FIG. 10 is a flowchart showing a reproducing operation for reproducing contents data in the second embodiment;
FIG. 11 is a diagram showing operations of each section and a flow of data in a recording operation for recording contents data in the third embodiment of the present invention;
FIG. 12 is a flowchart showing a recording operation for recording contents data in the third embodiment;
FIG. 13 is a diagram showing operations of each section and a flow of data in a reproducing operation of contents data in the third embodiment of the present invention; and
FIG. 14 is a flowchart showing a reproducing operation for reproducing contents data in the third embodiment.

### DETAILED DESCRIPTION OF THE PREFERRED EMBODIMENTS

The present invention will now be described with reference to preferred embodiment shown in the drawings.

The following embodiment relates to the case where the present invention is applied to an optical disc, which has groove tracks serving as spiral groove tracks for recording data, and land tracks formed between the groove tracks, can optically record data, and reproduce the recorded data.

The land tracks refer to tracks formed with heights, which are different from those of the groove tracks.

### - First Embodiment -

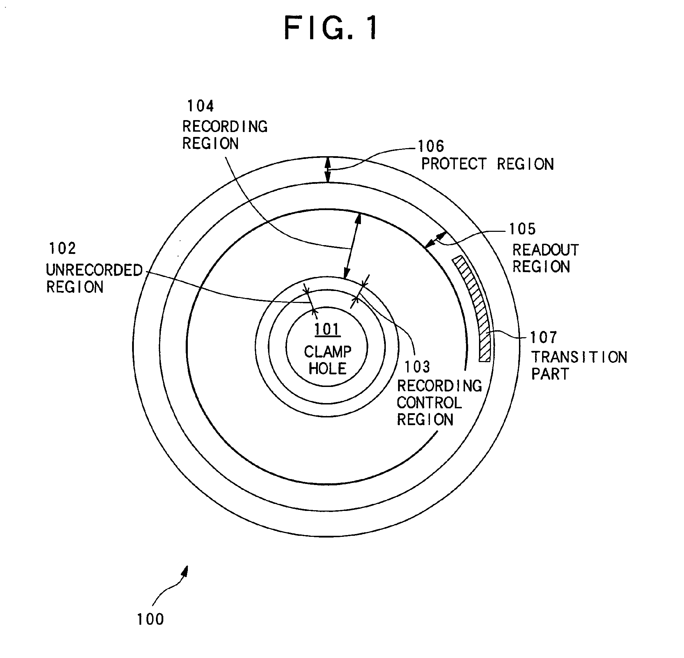

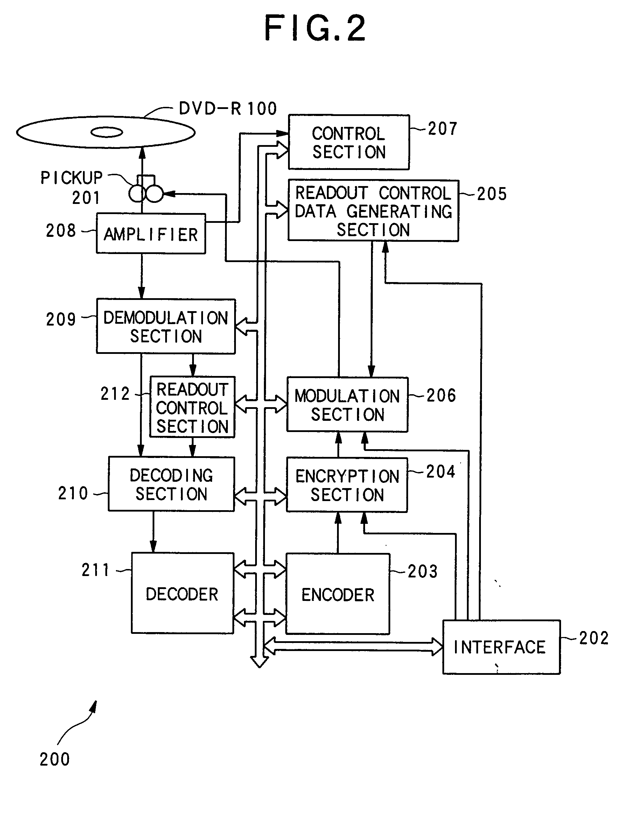

FIGS. 1 to 5 are diagrams showing the first embodiment of a data recording medium, a reproduction apparatus, and a recording device of the present invention. FIG. 1 is a diagram showing a physical structure of the present embodiment. FIG. 2 is a block diagram showing the configuration of a recording and reproduction device according to the present embodiment.

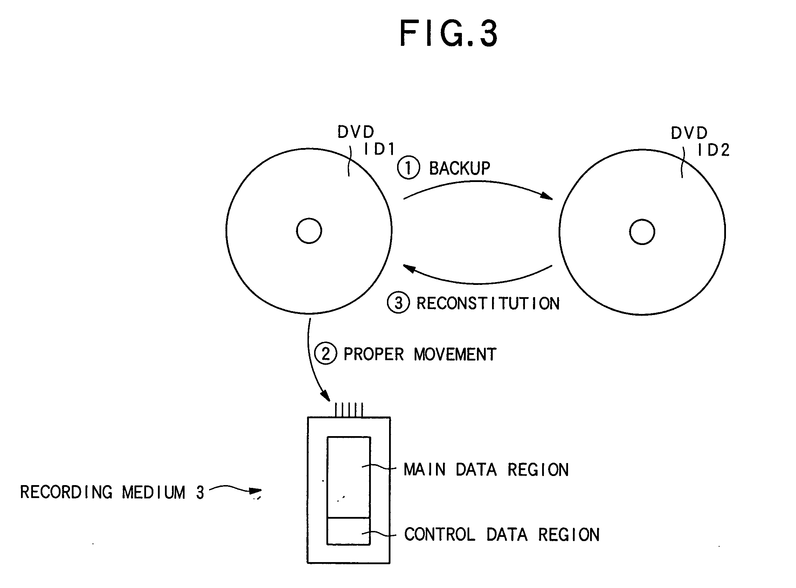

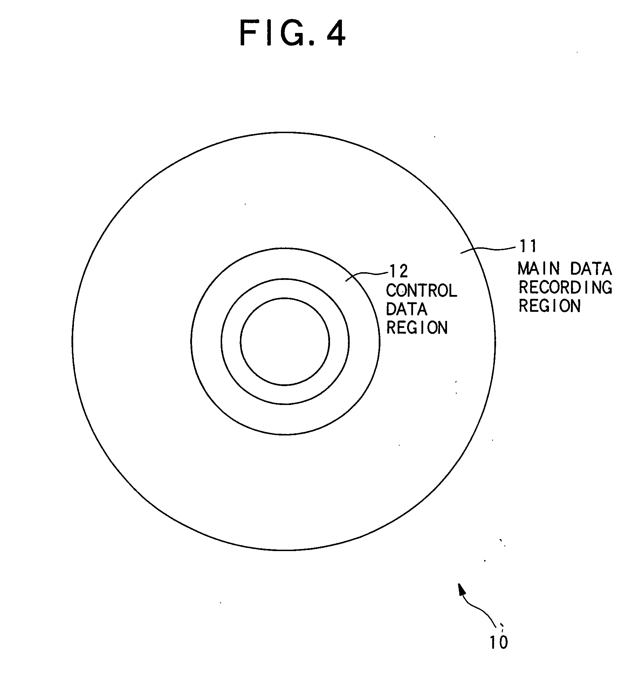

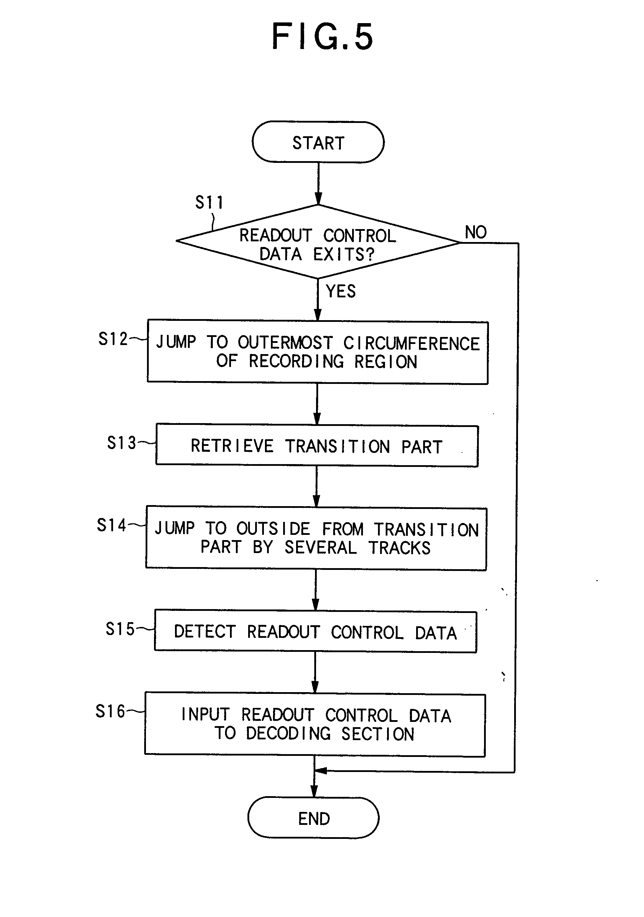

Further, FIG. 3 is a flowchart showing an operation of retrieving readout control data in the present embodiment. FIG. 4 is a flowchart showing an operation of recording contents data in the present embodiment. FIG. 5 is a flowchart showing an operation of reproducing contents data in the present embodiment.

The physical structure of an optical disc 100 will be firstly described with reference to FIG. 1.

As shown in FIG. 1, an optical disc 100 is constituted from an inner side by a clamp hole 101 for fixing the optical disc 100 on the rotation axis of a spindle motor (not shown) of the recording and reproduction device, an unrecorded region 102 for fixing the optical disc 100, a recording control region 103 for previously recording identification data and management data of the optical disc 100, a recording region 104 for recording data to be actually recorded, for example, contents data such as audio data and video data and contents management data such as copyright data of the contents data recorded on the optical disc 100, a readout region 105 for recording various kinds of data for completing data recording or data reproduction, and a protect region 106 for recording readout control data.

This recording and reproduction device for recording the contents data on the optical disc 100 and for reproducing the contents data from the optical 100 will be described later, and the readout control data on the protect region 106 will be described later.

In the recording control region 103, the recording region 104, the readout region 105, and the protect region 106, the groove tracks and the land tracks are formed so as to be adjacent to one another, and spirally from the inner circumference to the outer circumference. Data to be recorded is recorded from the inner circumference to the outer circumference with respect to the groove tracks.

Further, in the recording control region 103, the following data is recorded beforehand: data for setting the intensity of light beam when data is recorded on the optical disc 100, data indicating a starting position from any position of recording when the data is recorded, identification data of the optical disc 100, and data indicating the provision of the protect region, which will be described later.

For example, in the present embodiment, an identification number such as a serial number (hereinafter, simply referred to as an identification number) is used as identification data of the optical disc 100, and the identification number distinguishes the optical disc 100 from the other optical disc. Copyright data of the contents data includes a name of a copyright holder, copy control data indicating whether the data to be recorded can be legally copied only once or copying is prohibited, and data for descrambling the scrambled data when the scrambled data is copied (hereinafter, referred to as usage rule data).

The optical disc 100 configured thus has the protect region 106 outside the outermost groove track of the readout region 105, and the data on the protect region 106 cannot be obtained to except when specific operations are performed. This specific operation is included reproducing operation and recording operation in the present embodiment. The producing operation and the recording operation will be described later.

For example, between the outermost groove of the readout region 105 and the protect region 106, a transition part 107 indicated by oblique lines in FIG. 1 is formed for making a transition of a light spot formed on the optical disc 100 on a groove track, which has data recorded, disposed on the inner circumference of a groove track which is currently irradiated with a light beam. Hence, the groove track, which is currently irradiated with a light beam, refers to as a first groove track, and the groove track, which is disposed on the inner circumference of the first groove track, refers to as a second groove track. Further, a vacant track which is equivalent to several tracks of about 8 tracks is formed between the outermost groove of the readout region 105 and the protect region 106.

According to the present embodiment, such a physical structure is provided and the following technique of controlling a light beam irradiation position is used, so that access limitation is achieved.

In the technique of controlling a light beam irradiation position, a plurality of transition pits which have the same height as the groove track for gradually making transition of a light spot from the second groove track to the first groove track are formed on the transition part 107 on a land track between the first groove track and the second groove track, and on a land track at a predetermined length from the end of the second groove track. By adjusting an amount of light reflected on the light spot, a tracking servo is controlled and the irradiation position of a light beam is controlled.

Thus, when a light beam is sequentially emitted onto the optical disc from the inside, the groove track on the outer circumference of the readout region 105 prevents irradiation on a track on the outer circumference of the groove track, that is, data is not read.

Further, on the outer circumference of the groove track on the outer circumference of the readout region 105, a vacant track of several tracks is provided. Hence, unexpected access can be prevented.

With this configuration, when the above-described backup disc is produced, that is, when the tracks are traced from the inside to the outside of the DVD-R 100 to perform RF copying, the data on the protect region 106 cannot be obtained. Namely, the transition part 107 prevents that a pickup of a reproduction apparatus advances to the outer circumference beyond the part.

Refer to Japanese Laid-Open Patent Application No. 11-328675 about the detailed technique of controlling a position of irradiating a light beam.

The recording region 104 and the protect region 106 are saved as reproduced data region of the present invention, and the protect region 106 is saved as reproduction auxiliary data region of the present invention.

Next, a recording and reproduction device for recording and reproducing copyrighted contents data, for example, video data accompanied with audio data on the optical disc will be described with reference to FIG. 2. Hence, the optical disc will be described as DVD-R.

The configuration of the recording and reproduction device will be firstly described with reference to FIG. 2. FIG. 2 is a block diagram showing a configuration of the recording and reproduction device.

As shown in FIG. 2, the recording and reproduction device 200 has a pickup 201 for driving a semiconductor laser based on inputted contents data. The pickup 201 irradiates the DVD-R 100 with a light beam, so that data is recorded and reproduced on the DVD-R 100.

The recording and reproduction device 200 comprises an interface 202 where contents data is inputted, an encoder 203 for encoding inputted contents data, an encryption section 204 for performing predetermined encryption on encoded contents data, the encryption being used for recording on the DVD-R 100, a readout control data generating section 205 for generating readout control data for controlling readout of the contents data based on a previously retrieved identification number of the DVD-R 100 and the contents management data, a modulation section 206 which generates a modulation signal for controlling the pickup 201 based on the encrypted data and readout control data, and a control section 207 for performing general control on each above-mentioned section while sending and receiving necessary control data based on the control signal via a recording bus.

Further, the recording and reproduction device 200 comprises an amplifier 208 for producing a reproduction signal retrieved by the pickup 201, a demodulation section 209 for performing predetermined demodulation on a reproduction signal to produce a demodulation signal, a decoding section 210 which interprets and retrieves audio data and video data from a demodulation signal, a decoder 211 which converts interpreted audio data and video data to data in a predetermined format, that is, a audio signal and a video signal in a predetermined format and outputs the signals to the outside, and a readout control section 212 which retrieves readout control data via the amplifier 208 and the demodulation section 209 and controls readout of contents data based on the readout control data.

The interface 202 is served as reproduction data acquiring device, reproduction auxiliary data acquiring device, and first and second identification data acquiring device of the present invention. The encryption section 204 is served as encryption device of the present invention. The readout control data generating section 205 is served as reproduction auxiliary data acquiring device and generating device of the present invention. The pickup 201, the encryption section 204, and the modulation section 206 are served as recording device of the present invention. The control section 207 is served as reproduction control device and control device of the present invention.

Further, the decoding section 210 is served as identification data acquiring device and decoding device of the present invention. The readout control section 212 is served as reproduction auxiliary data retrieving device, comparing device, generating device, and readout control data retrieving device of the present invention. The pickup 201, the demodulation section 209, the decoding section 210, and the decoder 211 are served as reproduction control device of the present invention.

The pickup 201 operates in response to a modulation signal generated by the modulation section 206 when data is recorded on the DVD-R 100. A semiconductor laser (not shown), which is provided in the pickup 201 and emits a recording light beam onto the DVD-R 100, is driven in response to the modulation signal, and the light beam varying in intensity is emitted according to data to be recorded. The data to be recorded is included encrypted contents data, the readout control data and so on.

Further, the pickup 201 emits a light beam of fixed intensity for reproduction, receives reflected light on a light-receiving part (not shown), generates a detection signal according to a change in intensity of the reflected light, and outputs the detection signal to the amplifier 208.

The contents data having a predetermined format is inputted to the interface 202 from the outside, and the interface 202 outputs audio data and video data included in the inputted contents data to the encoder 203.

Further, the interface 202 outputs contents management data such as usage rule data, which must not be tampered with the contents data, to the readout control data generating section 205. Furthermore, the interface 202 outputs the contents management data and the other pieces of data such as text data to the modulation section 206.

Besides, the other data such as text data may be included in contents management data.

The audio data and the video data of the contents data are inputted to the encoder 203. The encoder 203 performs predetermined modulating operations and coding operations, and outputs the audio data and the video data having predetermined data formats to the encryption section 204.

The encryption section 204 performs a predetermined encrypting operation on the audio data and the video data of inputted contents data, so that encryption data is generated, and outputs the generated encryption data to the modulation section 206.

For example, the encryption section 204 performs the encrypting operations based on so-called SDMI (Secure Digital Music Initiative) standard.

The identification number of the DVD-R 100 and contents management data recorded on the DVD-R 100 are inputted to the readout control data generating section 205. The readout control data generating section 205 generates readout control data based on the identification number and the contents management data of the DVD-R 100, and outputs the generated readout control data to the modulation section 206.

For example, the identification number of the DVD-R 100 is read via the pickup 201 during an initial operation performed when the DVD-R 100 is stored in the recording and reproduction device 200, and the read identification number is inputted to the readout control data generating section 205 via the demodulation section 209.

Besides, the identification number of the DVD-R 100 is recorded on the DVD-R 100 in advance.

Every time new contents data is added to the DVD-R 100, every time a legal moving operation is performed on recorded contents data, or every time recorded contents data is partially omitted, the readout control data generating section 205 generates the readout control data based on the identification number of the DVD-R 100 and contents management data, and updates the readout control data recorded on the protect region 106.

In the readout control data generating section 205, such readout control data may be generated for each piece of contents data, or may be generated based on all pieces of contents management data recorded on the DVD-R 100.

For example, in the readout control data generating section 205, when readout control data is generated for each piece of contents data, the readout control data is generated in such a manner as to perform recording in association with each piece of the contents data.

To be specific, the readout control data generating section 205 generates another readout data when target contents data is moved, omitted, and changed, and the readout control data generating section 205 records the generated readout data on the protect region 106 for each piece of the contents data.

Further, when only piece of readout control data is generated based on all pieces of contents data recorded on the DVD-R 100, the readout control data generating section 205 reads management data of all pieces of contents data by a predetermined method every time contents data recorded on the DVD-R 100 is changed, that is, any one of pieces of contents data is moved, omitted, or added. The readout control data generating section 205 generates another readout control data together with newly inputted contents management data or contents management data to be changed, and records the generated read control data on the DVD-R 100, that is, updates the data.

Encryption data encrypted by the encryption section 204, readout control data generated by the readout control data generating section 205, and contents management data are inputted to the modulation section 206. The modulation section 206 controls the pickup 201 to record the encryption data, the readout control data, and the contents management data on the DVD-R 100 based on inputted each data.

To be specific, the modulation section 206 generates a recording signal based on encryption data, contents management data, and readout control data, and the modulation section 206 generates a control signal based on the recording signal for controlling the pickup 201 and outputs the control signal to the pickup 201.

As described above, the encryption data and the contents management data are recorded on the recording region 104 and the readout control data is recorded on the protect region 106.

Further, other data such as test data are recorded on the recording region 104 together with the encryption data and the contents management data.

The control section 207 is mainly constituted by a central processing unit (hereinafter, referred to as a CPU) and a memory. The control section 207 performs control on each section when the contents data is recorded and is reproduced, which will be described later.

Moreover, the control section 207 retrieves predetermined data such as the management data recorded on the recording control region 103 via the pickup 201 and the demodulation section 209. Particularly, the control section 207 retrieves predetermined data of the recording control region 103 during an initial operation for performing a reproducing operation, which will be described later, to judge whether readout control data is recorded or not, that is, whether the protect region 106 is present or absent.

Namely, when the control section 207 retrieves predetermined data and judges that the data recording medium (DVD-R) has the protect region 106, the control section 207 reads the readout control data by predetermined operations, which will be described later.

The retrieving operations of the readout control data in the control section 207 will be described in detail.

The amplifier 208 performs predetermined amplifying operations and waveform shaping operations on a detection signal detected by the pickup 201, generates a reproduction signal, and outputs the reproduction signal to the demodulation section 209.

A reproduction signal, which has been subjected to the predetermined operations in the amplifier 208, is inputted to the demodulation section 209. The demodulation section 209 performs a predetermined demodulating operation on the reproduction signal.

Further, the demodulation section 209 generates the identification number of the DVD-R 100, encryption data in which the audio data and the video data are encrypted, the contents management data, and the readout control data. The demodulation section 209 outputs generated encryption data to the decoding section 210, generated readout control data to the readout control section 212, and outputs contents management data to the control section 207 or the outside to control the reproduced contents data.

Other data such as text data are generated by the demodulation section 209 and are outputted to a display (not shown).

Encryption data generated by the demodulation section 209 is inputted to the decoding section 210. The decoding section 210 performs a predetermined operation on the encrypted contents data, and outputs the encrypted contents data performed the predetermined operation to the decoder 211. For example, the encryption section 204 performs the decoding operations based on so-called SDMI standard.

Decoded contents data, that is, audio data and video data having a predetermined format are inputted to the decoder 211. The decoder 211 demodulates the audio data and the video data having an inputted predetermined format to an original data format, and outputs the audio data and the video data having the original data format to the outside.

The readout control section 212 generates check data based on the identification number of the DVD-R 100 and the contents management data as with the readout control data generated by the readout control data generating section 205. The readout control section 212 compares generated check data and the readout control data retrieved via the pickup 201 and the demodulation section 209. When generated check data and retrieved readout control data are in agreement, the readout control section 212 provides an instruction to the control section 207 to control each section such that contents data is outputted from the decoder.

For example, the readout control section 212 controls the decoding section 210 so as to decode the encrypted contents data when the generated check data and the retrieved readout control data are in agreement. When the generated check data and the retrieved readout control data are not in agreement, the decoding section 210 is controlled so as to prohibit decoding the encrypted contents data.

Besides, when the generated check data and the retrieved readout control data are not in agreement, instead of prohibition of decoding the contents data in the decoding section 210, the readout control section 212 may control the pickup 201, the demodulation section 209, or output of the contents data decoded by the decoder 211 such that contents data cannot be retrieved from the DVD-R 100.

Moreover, the readout control section 212 generates the check data based on the identification number of the DVD-R 100 and contents management data like above-described the readout control data generated by the readout control data generating section 205. Thus, in case where contents data is legally reproduced, the retrieved readout control data which are generated when the contents data is recorded (moved) on the DVD-R 100 and the generated check data are 'in agreement.

The readout control section 212 reads and retrieves the identification number of the DVD-R 100 and the contents management data from the DVD-R 100 by retrieving readout control data, which will be described later, during an initial operation when the DVD-R 100 is reproduced or by reproducing the recording control region 103.

With the above-described configuration, as shown in FIG. 3, the recording and reproduction device 200 of the present invention performs the following operations: (1) as a backup of a DVD 1, contents data, which are the contents of the DVD 1, and interpretation control data is RF (Radio Frequency)-copied on another DVD 2 (production of a backup disc), (2) subsequently, contents data recorded on the DVD 1 is legally moved to a memory or another data recording medium 3 of the DVD, and (3) finally, when the contents data and the interpretation control data are moved from the RF-copied DVD 2 to the DVD 1 which has recorded contents data beforehand (restoration), even in the case where two contents data on DVD 1 and the data recording medium 3 is generated from contents data having one copyright, the readout control data is not copied on the backup disc. In the case where contents data is legally moved from the DVD 1, readout control data is legally updated.

On the other hand, as shown in FIG. 3, a DVD-R 10 is constituted by a main data region 11, in which contents data such as video data and audio data is encrypted and recorded, and an interpretation control data region 12, which is provided on a part of the inner circumference and records interpretation control data for interpreting encryption of contents data recorded on the main data region 11 in addition to physical format data and disc manufacturing data (identification data). When the above-described operations are performed on the DVD-R 10, two contents data having copyright on the DVD 1 and the data recording medium 3 is generated respectively from contents data having one copyright.

Namely, when the DVD-R 10 is reproduced by a reproduction apparatus (not shown), normal video signal and audio signal cannot be obtained simply by reproducing contents data recorded on the main data region 11. Thus, interpretation control data recorded on the interpretation control data region 12 is read before contents data is read, encrypted contents data is interpreted based on the interpretation control data, original and normal video data and audio data is reconstituted, and reproduction is performed. However, in such the reproducing method, unauthorized duplication is allowed, that is, illicitly recorded contents data can be reproduced by performing above-mentioned legal moving operation and backup operation on contents data.

To be specific, as shown in FIG. 4, (1) when a backup disc is produced, (2) contents data recorded on the DVD 1 is legally moved to a memory or another data recording medium 3 of the DVD, and (3) restoration is performed, encrypted contents data cannot be interpreted since inherent identification data in the DVD 2 differs from the identification data in the DVD 1. However, the contents data and interpretation control data which are recorded on the DVD 2 are returned to the DVD 1, so that identification data included in interpretation control data agrees with inherent identification data on the DVD, and the contents data is legally moved to the data recording medium 3. Thus, the contents data recorded on the data recording medium 3 can be reproduced.

As a result, in the DVD-R 10 shown in FIG. 4, two contents data having copyright on the DVD 1 and the data recording medium 3 is generated from contents data having one copyright, and a series of operations is repeated so as to generate a plurality of numbers of contents data from one contents data.

As described above, in the present embodiment, even when a backup disc is produced and contents data recorded on the DVD 1 is legally moved to another data recording medium 3, two contents data on the DVD 1 and the data recording medium 3 is generated respectively from contents data having one copyright, and restoration is performed from a backup disc, generated check data and recorded readout control data are in agreement in comparison performed by the readout control section 212 between the generated check data and the recorded readout control data during reproduction. Thus, the contents data cannot be outputted (decoded), reproduction cannot be performed in the case of the above-described unauthorized recording, thereby preventing unauthorized recording and reproduction.

In the case of an ordinary backup operation, that is, in the case of a backup disc is produced and restoration is performed, the contents data can be reproduced after restoration since readout control data is not rewritten.

Next, retrieving processing of readout control data recorded on the DVD-R 100 in the recording and reproduction device 200 will be described with reference to FIG. 5.

FIG. 5 is a flowchart showing an operation of retrieving processing of readout control data recorded on the DVD-R.

Moreover, the retrieving processing of readout control data is performed during an initial operation for reproducing the DVD-R 100, that is, any one of contents data stored in the DVD-R 100 is reproduced. The readout control data, which has been read out, is used when contents data is outputted.

First, when the DVD-R 100 is stored in a storage device (not shown), the control section 207 judges whether the DVD-R 100 has readout control data or not (step S11).

To be specific, the control section 207 controls the pickup 201 to judge whether the DVD-R 100 has readout control data or not based on data recorded on the recording control region 103 on the DVD-R 100.

Subsequently, the control section 207 completes this operation when it is judged that the DVD-R 100 does not have the readout control data. The other hand, the control section 207 performs the following operation when it is judged that the DVD-R 100 has the readout control data.

First, the control section 207 makes the pickup 201 to jump to the outermost circumference of the recording region 104 on the DVD-R 100, that is, to the readout region 105 (step S12).

Subsequently, the control section 207 controls the pickup 201 to irradiate the readout region 105 and detect the transition part 107 on the DVD-R 100 (step S13).

The transition part 107 is detected as follows: the transition part 107 is recognized when a tracking servo control section and the like (not shown) recognizes that the pickup 201 starts to rotate on the same position, for example, the pickup 201 is on the same position.

Next, the control section 207 makes the pickup 201 further jump to the outer circumference from the transition part 107 by predetermined tracks, that is, the outermost track of the protect region 106 (step S14).

Next, the control section 207 moves the pickup 201 to the inside from the track where the pickup 201 jumps while emitting a light beam, and detects data recorded on the region, that is, readout control data (step S15).

Finally, when readout control data is detected by the pickup 201, the control section 207 outputs the data to the readout control section 212 via the amplifier 207 (step S16).

In this way, in the present embodiment, by controlling the pickup 201 using the control section 207, readout control data existing on a protect region is detected and the data is outputted to the readout control section 212.

Since the protect region basically records only readout control data, when a pit exists on the protect region, it can be judged that readout control data is recorded.

Moreover, in the readout control section 212, inputted readout control data is stored for reproduction in the inside of the readout control section 212 such as a memory.

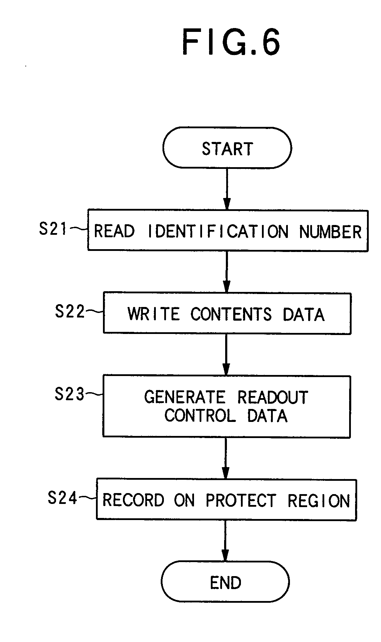

Next, a recording operation for recording contents data on the DVD-R 100 will be described with reference to FIG. 6.

FIG. 6 is a flowchart showing an operation of recording processing of the contents data recorded on the DVD-R 100.

First, the control section 207 performs a predetermined operation to read the identification number of the DVD-R 100 performing the recording operation (step S21).

Subsequently, when predetermined operations are performed by a user and contents data is inputted to the recording and reproduction device 200, the control section 207 controls each section to write the contents data on the DVD-R 100 (step S22).

To be specific, when predetermined operations are performed and the contents data is inputted to the encoder 203, the control section 207 makes the encryption section 204 encrypt audio data and video data of the contents data to generate encryption data. The control section 207 makes modulation section 206 generate a recording signal based on the encryption data and contents management data, and record the encryption data, which is the encrypted contents data of audio data and video data, and the contents management data on the recording region 104 on the DVD-R 100, via the pickup 201.

Subsequently, the control section 207 makes the readout control data generating section 205 generate readout control data based on the previously read identification number of the DVD-R 100 and inputted contents management data (step S23).

For example, in case where only readout control data is generated on the DVD-R 100, and the contents data has been already recorded on the DVD-R 100, the contents management data is read by a predetermined method in advance, and the readout control data is generated based on the contents management data and the identification number of the DVD-R 100.

Finally, the control section 207 makes the modulation section 206 and the pickup 201 record (rewrite) the readout control data on the protect region 106 on the DVD-R 100 (step S24).

In this way, in the present embodiment, encrypted audio data and video data are recorded on the recording region 104, and readout control data is recorded on the protect region 106.

Besides, when contents data is legally moved, the corresponding contents data is omitted and the recording operation is started from step S21.

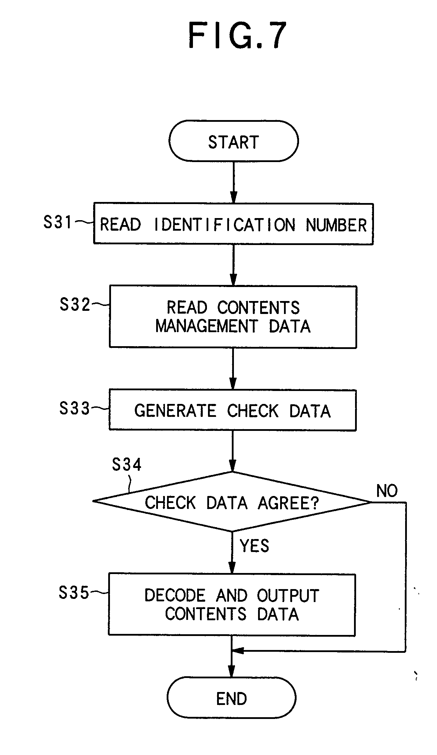

Next, a reproducing operation for reproducing contents data recorded on the DVD-R 100 will be described with reference to FIG. 7.

FIG. 7 is a flowchart showing the reproducing operation for reproducing contents data recorded on the DVD-R 100.

First, when the DVD-R 100 is stored in a storage device (not shown), the control section 207 performs a predetermined operation to control readout of the identification number of the DVD-R 100 for performing the recording operation, and outputting the identification number to the readout control section 212 via the demodulation section 209 (step S31).

For example, the identification data is recorded on the recording control region 103 on the DVD-R 100.

Subsequently, in response to an instruction of reproduction performed by a user or automatic reproduction from the control section 207, the control section 207 controls readout of contents management data of contents data to be reproduced and outputting the contents management data to the readout control section 212 via the demodulation section 209 (step S32).

Besides, the contents management data is outputted to the readout control section 212 and is also outputted to the control section 207 or to the outside to manage contents data which is reproduced.

Next, the control section 207 makes the readout control section 212 generate check data based on the identification number and contents management data, which is management data of contents data to be read (step S33).

Subsequently, the control section 207 makes the readout control section 212 judge whether the read readout control data, which has been obtained by the operation of retrieving readout control data, and the generated check data are in agreement (step S34). When the readout control data and the check data are in agreement, the control section 207 controls reading the contents data from the DVD-R 100 and makes the decoding section 210 decode encrypted contents data and the control section 207 control outputting audio data and video data via the decoder 211 (step S35).

To be specific, the control section 207 makes the pickup 201 retrieve a detection signal, and the amplifier 208 perform an amplifying operation and a waveform shaping operation on the detection signal. Further, the control section 207 makes the decoding section 210 decode encrypted audio data and video data and control outputting the data to the outside.

The other hand, when the readout control data and the check data are not in agreement, the control section 207 judges that the contents data is not legally recorded, discontinues the reproducing operation to complete processing.

As described above, according to the present embodiment, the readout control data is generated based on the contents management data and the identification data of the DVD (data recording medium), and the readout control data for controlling readout of the contents data when the contents data is reproduced is recorded on a DVD. Further, the check data generated based on recorded contents management data and recorded identification data of the DVD is compared with the readout control data recorded on the DVD, and when the generated check data and the recorded readout control data are in agreement, the contents data is reproduced.

Namely, when the contents data is illicitly recorded and reproduced, unlike when contents data is recorded legally, the readout control data recorded on a DVD is not updated. Accordingly, because the generated check data and the recorded readout control data are not in agreement, the contents data cannot be outputted.

Therefore, only in the case of the contents data recorded legally, protecting copyrighted contents data because it is possible to reproduce the contents data.

In the present embodiment, the reproducing operation and the recording operation are performed by the recording and reproduction device 200, however, it is also possible to be executed the reproducing and recording operation as a result on which programs for executing the reproduction and recording operations are stored on the recording medium and the programs are read by a computer.

In this case, the recording and reproduction device 200 is provided with the computer, which reads and executes the programs of the reproduction and recording operation, and recording medium in which the programs are stored via a network such as the Internet. As a result, the same effects as those of the above described the recording and reproduction device 200 can be obtained.

### - The second embodiment -

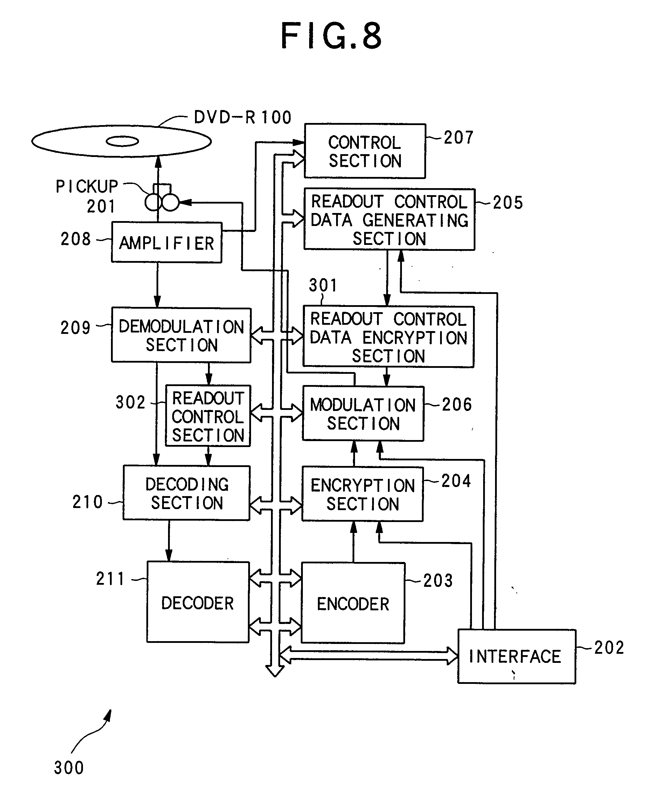

FIGS. 8 to 10 are diagrams showing the second embodiment of a data recording medium, a reproduction apparatus, and a recording apparatus according in the present invention.

The present embodiment is substantially same with the first embodiment except that readout control data is encrypted by recognition data of a recording and reproduction device and an optical disc when contents data is encrypted and decoded and the readout control data is recorded on the optical disc instead of generating readout control data based on contents management data and identification data (identification number) of a data recording medium in the first embodiment. Since other configurations are identical to those of the first embodiment, the same sections are indicated by the same reference numerals and the description thereof is omitted.

Further, the recognition data (hereinafter, media recognition data) of the recording and reproduction device and the optical disc refers to data which is generated based on the recognition data to judge whether a DVD-R can legally record copyright data or not and whether the recording and reproduction device (or drive) can legally reproduce copyright data is recorded on the DVD-R and record copyright data on the DVD-R.

Therefore, when data stored on an optical disc which does not have the recognition data for generating the media recognition data is reproduced, when data is recorded in an optical disc which does not have the recognition data, or when data is reproduced and recorded by a recording and reproduction device which does not have the recognition data, the media recognition data cannot be generated and contents data cannot be recorded or reproduced.

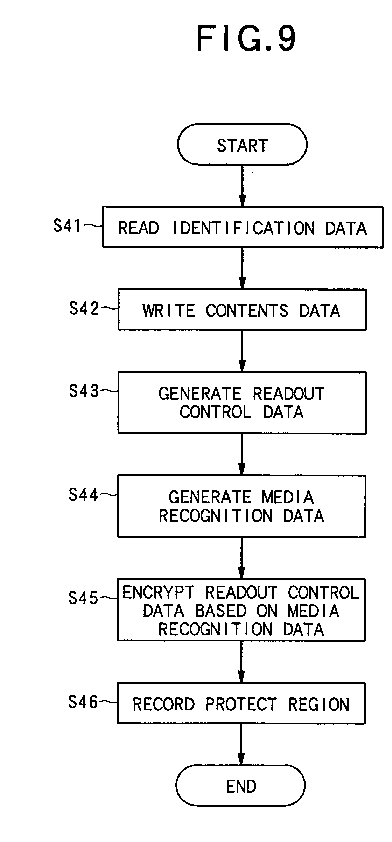

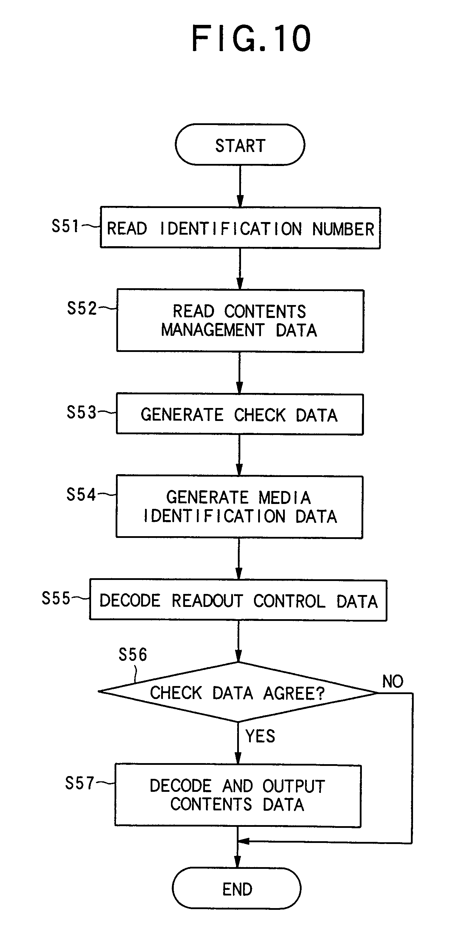

FIG. 8 is a block diagram showing a configuration of the recording and reproduction device according to the second embodiment in the present invention, FIG. 9 is a flowchart showing a retrieving operation of readout control data according to the second embodiment, and FIG. 10 is a flowchart showing a recording operation for recording contents data according to the second embodiment.

As shown in FIG. 8, a recording and reproduction device 300 of the present embodiment comprises an interface 202, an encoder 203, an encryption section 204 for performing predetermined encryption for recording on a DVD-R 100, a readout control data generating section 205 for generating the readout control data, a readout control data encryption section 301 which encrypts the readout control data based on media recognition data of the DVD-R 100 and the recording and reproduction device 300, a modulation section 206 which generates a modulation signal for controlling a pickup 201 based on the encrypted data and the readout control data, and a control section 207 for performing general control on each above-mentioned section, an amplifier 208, a demodulation section 209, a decoding section 210 for interpreting audio data and video data, a decoder 211 which provides outputting the audio data and the video data to the outside, and a readout control section 302 which decodes encrypted readout control data and controls readout of contents data.

In the present embodiment, the readout control data encryption section 301 is served as generating device of the present invention, and the readout control section 302 is served as the reproduction auxiliary data retrieving device and generating device.

Readout control data generated by the readout control data generating section 205 and recognition data of the DVD-R 100 are inputted to the readout control data encryption section 301. For example, recognition data of the DVD-R 100 is read via the pickup 201 during an initial operation and is inputted to the readout control data encryption section 301.

Moreover, the readout control data encryption section 301 generates the media recognition data based on recognition data of the recording and reproduction device 300 and inputted recognition data of the DVD-R 100, the recognition data having been stored in an internal memory (not shown). The readout control data encryption section 301 encrypts inputted readout control data based on the media recognition data and outputs the encrypted readout control data to the modulation section 206.

The modulation section 206 in the present embodiment produces a recording signal based on inputted and encrypted readout control data as in the case of the first embodiment.

Every time new contents data is added to the DVD-R 100, every time a legal moving operation is performed on recorded contents data, or every time recorded contents data is partially omitted, the readout control data encryption section 301 generates the readout control data based on a recorded identification number of the DVD-R 100 and the contents management data, and the readout control data encryption section 301 encrypts readout control data based on the media recognition data when contents data is added, moved, and omitted.

Encrypted readout control data, which is demodulated by the demodulation section 209, is inputted to the readout control section 302, and the recognition data of the DVD-R 100 is inputted to the readout control section 302. The recognition data is read via the pickup 201 during an initial operation.

The readout control section 302 generates media recognition data based on, for example, the recognition data of the recording and reproduction device 300 and inputted recognition data of the DVD-R 100. For example, the recognition data has been stored in an internal memory (not shown) in the readout control section 302.

The readout control section 302 decodes encrypted the readout control data based on the media recognition data, and generates check data based on the identification number of the DVD-R 100 and the contents management data. The readout control section 302 compares the generated check data and the encrypted readout control data. As in the case of the first embodiment, when the check data and the readout control data are in agreement, an instruction is provided to the control section 207 to control each section such that the contents data is outputted from the decoder 211.

In the present embodiment, with this configuration, in case where the data is not reproduced by a legal recording and reproduction device 300 or in case where the data is not recorded on a legal DVD-R 100, the readout control data cannot be decoded.

Therefore, as in the case of the first embodiment, the readout control section 302 can not output the contents data outside because the check data and the readout control data are not in agreement

Next, a recording operation for recording contents data on the DVD-R 100 will be described with reference to FIG. 9.

First, the control section 207 performs a predetermined operation to read the identification number of the DVD-R 100 performing the recording operation (step S41).

Subsequently, when predetermined operations are performed by a user or the like and contents data is inputted to the recording and reproduction device 300, the control section 207 controls writing the contents data on the DVD-R 100 (step S42).

To be specific, when predetermined operations are performed to input contents data to the encoder 203, the control section 207 makes the encryption section 204 encrypt audio data and video data of the contents data to generate encryption data, and the control section 207 makes the modulation section 206 generate a recording signal based on the encryption data and contents management data and write the encryption data, that is, contents data of encrypted audio data and video data and the contents management data on the recording region 104 on the DVD-R 100 via the pickup 201.

Subsequently, the control section 207 makes the readout control data generating section 205 generate readout control data based on the previously read identification number of the DVD-R 100 and the inputted contents management data (step S43).

For example, in case where only the readout control data is generated on the DVD-R 100, and the contents data has been already recorded on the DVD-R 100, the contents management data is read by a predetermined method in advance, and the readout control data is generated based on the contents management data and the identification number of the DVD-R 100.

On the other hand, the control section 207 makes the readout control data encryption section 301 generate the media recognition data based on the recognition data of the DVD-R 100 and the recording and reproduction device 300 (step S44). The recognition data of the DVD-R 100 and the recording and reproduction device 300 have been inputted and retrieved in advance

Subsequently, the control section 207 makes the readout control data encryption section 301 encrypt the inputted readout control data based on the media recognition data, and output the data to the modulation section 206 (step S45).

Finally, the control section 207 makes the modulation section 206 and the pickup 201 record (rewrite) the readout control data on the protect region 106 on the DVD-R 100 (step S46).

In this way, in the present embodiment, the encrypted audio data and video data are recorded on the recording region 104, and the encrypted readout control data is recorded on the protect region 106.

Besides, when contents data is legally moved, the contents data is omitted and the readout control data is generated from step S41.

Next, a reproducing operation for reproducing contents data recorded on the DVD-R 100 will be described with reference to FIG. 10.

First, when the DVD-R 100 is stored in a storage device (not shown), the control section 207 performs a predetermined operation to read the identification number of the DVD-R 100 for performing recording, and output the number to the readout control section 302 via the demodulation section 209 (step S51).

For example, the identification number is recorded on the recording control region 103 on the DVD-R 100, and the control section 207 performs the predetermined operation to read the identification number of the DVD-R 100 for performing recording.

Subsequently, in response to an instruction of reproduction performed by a user or automatic reproduction from the control section 207, the control section 207 controls reading contents management data of contents data to be reproduced and output the data to the readout control section 302 via the demodulation section 209 (step S52).

Moreover, the contents management data is outputted to the readout control section 212 and is also outputted to the control section 207 or to the outside to manage the contents data to be reproduced.

Subsequently, the control section 207 makes the readout control section 302 generate check data based on the identification number of the DVD-R 100 and contents management data (step S53).

On the other hand, the control section 207 makes the readout control section 302 generate the media recognition data based on the recognition data of the DVD-R 100 and the recording and reproduction device 300 (step S54). The recognition data of the DVD-R 100 and the recording and reproduction device 300 have been inputted and retrieved in advance

Subsequently, the control section 207 makes the readout control section 302 decode the encrypted readout control data, which has been retrieved in advance by the above operation for retrieving the readout control data, based on the generated media recognition data (step S55).

Subsequently, the control section 207 makes the readout control section 302 judge whether the decoded readout control data and the generated check data are in agreement (step S56).

When readout control data and check data are in agreement, the control section 207 controls reading the contents data from the DVD-R 100, and makes the decoding section 210 decode the encrypted contents data. The control section 207 controls output the audio data and the video data via the decoder 211 (step S57).

To be specific, the control section 207 makes the pickup 201 retrieve a detection signal, and makes the amplifier 208 perform an amplifying operation and a waveform shaping operation on the detection signal. Further, the control section 207 controls decoding the encryption data including encrypted audio data and video data, and controls output the data to the outside.

On the other hand, when the readout control data and the check data are not in agreement, the control section 207 judges that the contents data is not legally recorded, discontinues the decoding operation to complete processing.

As described above, according to the present embodiment, the readout control data is generated based on the contents management data and the identification data of the DVD (data recording medium), and readout control data for controlling readout of the contents data when the contents data is reproduced is recorded on a DVD. Further, the check data generated based on recorded contents management data and recorded identification data of the DVD is compared with the readout control data recorded on the DVD, and when the generated check data and the recorded readout control data are in agreement, the contents data is reproduced.

Namely, when contents data is illicitly recorded and reproduced, unlike when contents data is recorded legally, readout control data recorded on a DVD is not updated. Accordingly, generated check data and recorded readout control data are not in agreement and the contents data cannot be outputted.

Therefore, only in the case of contents data recorded legally, it is possible to reproduce the contents data, thereby protecting copyrighted contents data.

Further, in the present embodiment, even when the readout control data can be read from the protect region 106, the readout control data is encrypted, and legal readout control data cannot be retrieved if the reproduction operation and the recoding operation are performed by the illegal recording and reproduction device, and if the illegal optical disc is used when reproducing and recording. Thus, it is possible to further protect copyrighted contents data.

In the present embodiment, the reproducing operation and the recording operation are performed by the recording and reproduction device 300, however, it is also possible to be executed the reproducing and recording operation as a result on which programs for executing the reproduction and recording operations are stored on the recording medium and the programs are read by a computer.

In this case, the recording and reproduction device 300 is provided with the computer, which reads and executes the programs of the reproduction and recording operation, and recording medium in which the programs are stored via a network such as the Internet. As a result, the same effects as those of the above described the recording and reproduction device 300 can be obtained.

### -The third embodiment-

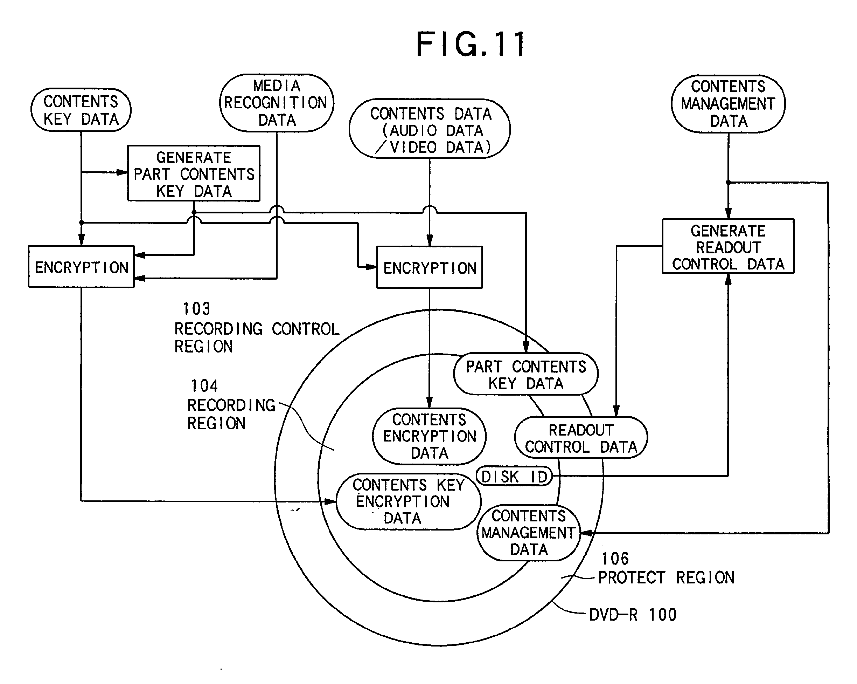

FIGS. 11 to 14 are diagrams showing the third embodiment of a data recording medium, a reproduction apparatus, and a recording apparatus according to the present invention.

The present embodiment is substantially same with the first embodiment expect that contents key data, which is retrieved based on readout control data and check data and uses for encrypting and decoding contents data, is recorded on the DVD-R and the contents data is decoded and reproduced based on the contents key data instead of judging whether contents data should be reproduced or not by comparing readout control data previously recorded on a data recording medium, and check data generated based on identification data of a data recording medium and contents management data recorded on the data recording medium during reproduction of contents data. Since the other configurations are identical to those of the first embodiment, the same members are indicated by the same reference numerals and description thereof is omitted.

Besides, in the present embodiment, reproduction of the contents data is not controlled based on generated readout control data. In the present embodiment, contents key data encrypted based on recognition data of a recording and reproduction device and an optical disc is decoded based on generated readout control, reproduction of the contents data is controlled based on the decoded contents key data similarly as in case of the second embodiment

Further, as described above, the physical structure of the optical disc of the present embodiment is substantially same with the first embodiment, in present embodiment, however, a part contents key data, which performs encryption and decoding on contents data, and readout control data for controlling readout of the part contents key data during reproduction are recorded in a protect region 106 which will be described later (see FIG. 1).

Hereinafter, key data of the contents data is referred to as contents key data (reproduction auxiliary data)), and part of key data of the contents data is referred to as part contents key data (part reproduction auxiliary data).

Further, the recording and reproduction device of the present embodiment has the same configuration as the first embodiment but performs different operations.

Namely, a recording and reproduction device of the present embodiment records the contents encryption data and the contents key encryption data on a recording region in a DVD-R. In the recording and reproduction device 200 of the present embodiment, an encryption section 204, a modulation section 206, a control section 207, and a readout control section 212 operate in a different manner from those of The first embodiment (see FIG. 2).

To be specific, the contents encryption data is generated by encrypting contents data based on contents key data, which will be described later, and the contents key encryption data is generated by encrypting the contents key data based on part contents key data, which is a part of the contents key data, and media recognition data, which will be described later.

Further, the recording and reproduction device 200 further records readout control data on the protect region 106. The readout control data controls readout of the part contents key data based on part contents data, an identification number of the DVD-R 100, and contents management data of the contents data.

In the present embodiment, the readout control section 212 is served as readout control data retrieving device of the present invention, and the decoding section 210 and the readout control section 212 are served as the reproduction auxiliary data retrieving device of the present invention.

Next, the configurations and operations in sections of the recording and reproduction device of the present embodiment will be described.

Audio data and video data of contents data, predetermined contents key data which is held by the control section 207 and is different for each DVD-R 100 and each contents data, part contents key data which is a part of the contents key data, and media recognition data generated based on identification data of the DVD-R 100 and the recording and reproduction device 200 are inputted to the encryption section 204.

Further, the encryption section 204 performs predetermined encryption on audio data and video data of inputted contents data by using contents key data. For example, the encryption section 204 performs the encryption based on so-called SDMI standard to generate encryption data of the contents data. Further, the encryption section 204 performs predetermined encryption on the contents key data by using part contents key data and the media recognition data, and outputs the encrypted contents encryption data and contents key encryption data to the modulation section 206.

Besides, the media recognition data refers to data which is generated based on each recognition data to judge whether a DVD-R 100 can legally record copyright data or not and whether a recording and reproduction device can legally perform reproduction and recording on a DVD-R 100 for recording copyright data similarly as the case of the second embodiment.

Further, in the present embodiment, the media recognition data of the DVD-R 100 is previously recorded on a recording control region 103, and media recognition data of the recording and reproduction device 200 is previously stored in the control section 207, the readout control data generating section 205, or the readout control section 212.

Contents encryption data encrypted by the encryption section 204, contents key encryption data, readout control data generated by the readout control data generating section 205, contents management data, and part contents key data generated by the control section 207 are inputted to the modulation section 206. The modulation section 206 controls a pickup 201 for recording these pieces of the inputted data on the DVD-R 100.

As described above, encryption data and contents management data are recorded on the recording region 104, and readout control data and part contents key data are recorded on the protect region 106.

Further, other data such as text data are recorded on the recording region 104 together with the encryption data and contents management data.

The control section 207 generates the contents key data, the part contents key data, and the media recognition data.

To be specific, the control section 207 produces a random function for each the contents data and each DVD-R 100, generates the contents key data differently for each DVD-R 100 and each the contents data based on the random function. Further, the control section 207 generates part contents key data, and outputs generated contents key data and part contents key data to the encryption section 204 and the modulation section 206.

Besides, the part contents key data refers to a part of contents key data set as described above, for example, data expressed by the last four digits when contents key data is converted into numbers.

Further, the control section 207 generates the media recognition data such as data indicative of a recording and reproduction device 200 capable of legally reproducing the above-described DVD-R 100 or data indicative of a recording and reproduction device 200 capable of legally reproducing the DVD-R 100. When the contents data is recorded, the control section 207 outputs the media recognition data to the encryption section 204. Further, when the contents data is reproduced, the control section 207 outputs the media recognition data to the decoding section 210.

The control section 207 generates the media recognition data based on inherent recognition data of a recording and reproduction device 200 and an identification number of the DVD-R 100. The recognition data of a recording and reproduction device 200 identifies a recording and reproduction device (or reproducing drive and recording drive) incapable of legally performing reproduction and recording.

A reproduction signal on which a predetermined operation has been performed by an amplifier 208 is inputted to a demodulation section 209. The demodulation section 209 performs a predetermined demodulating operation on the reproduction signal and generates an identification number of the DVD-R 100, contents encryption data, contents key encryption data, part contents key data, contents management data, and readout control data. The demodulation section 209 outputs the encryption data to the decoding section 210, the readout control data to the readout control section 212, and the contents management data to the control section 207 to manage the contents data to be reproduced.

Additionally, when readout permission is obtained by operations described later, the part contents key data is outputted to the decoding section 210, and the contents management data is outputted to the control section 207.

Encryption data generated by the demodulation section 209 is inputted to the decoding section 210. The decoding section 210 decodes the contents key encryption data based on the part contents key data, which is read by the retrieving operation of the readout control data described in the first embodiment, and the media recognition data, which is generated by the control section 207. The decoding section 210 decodes the contents data based on the decoded contents key data and outputs the decoded contents data to a decoder 211.

To be specific, the demodulation section 209 performs a decoding operation based on SDMI standard to decode the encrypted contents data.

Moreover, the retrieving operation of the readout control data according to the present embodiment retrieves the part contents key data as well as the readout control data.

The readout control section 212 generates the readout control data based on the identification number of the DVD-R 100 and contents management data.

Hereinafter, the generated readout control data is referred to as check data (generated readout control data), and the readout control data recorded on the protect region 106 is simply referred to as readout control data (recorded readout control data).

Moreover, the readout control section 212 compares the check data and the read readout control data. When the check data and readout control data are in agreement, the readout control section 212 controls each section such that the part contents key data is outputted to the decoding section 210, and contents management data is outputted to the control section 207 or to the outside

For example, when the check data and the readout control data are in agreement, the readout control section 212 controls the pickup 201, and each section so as to reproduce the part contents key data and input the data to the decoding section 210. On the other hand, when the check data and readout control data are not in agreement, the readout control section 212 controls the pickup 201 and the like so as to prohibit reproduction of the part contents key data.

The readout control section 212 may control output of each section such that part contents key data is not inputted to the decoding section 210 instead of prohibiting to reproduction of the part contents data by the pickup 201.

Further, the contents management data is outputted to the control section 207 or to the outside so as to manage recording and reproduction of the contents data to be reproduced.

Moreover, the check data is generated based on the identification number of the DVD-R 100 and the contents management data as in the case of the readout control data generated by the readout control data generating section 205. Thus, when the contents data is legally reproduced, the check data is equal to the readout control data generated when the contents data is recorded (moved) on the DVD-R 100.

Moreover, the readout control section 212 retrieves the identification number of the DVD-R 100 and the contents management data by performing retrieving processing for retrieving the readout control data during an initial operation when the DVD-R 100 is reproduced, or by reading from the DVD-R 100 when the recording control region 103 is reproduced.

Besides, this retrieving processing for retrieving the readout control data is the same as the retrieving processing already described in the first embodiment.

With this configuration, as in the case of the first embodiment, even when (1) a backup disc is produced, (2) contents data is legally moved from a DVD to a memory or other recording media such as a DVD, and (3) restoration is performed, the readout control data cannot be copied on the backup disc, and the data is updated when contents data is legally moved from a DVD (see FIG. 3).

Next, a recording operation for recording contents data on the DVD-R and a reproducing operation for reproducing contents data from the DVD-R according to the present embodiment will be described with reference to FIGS. 11 to 14.

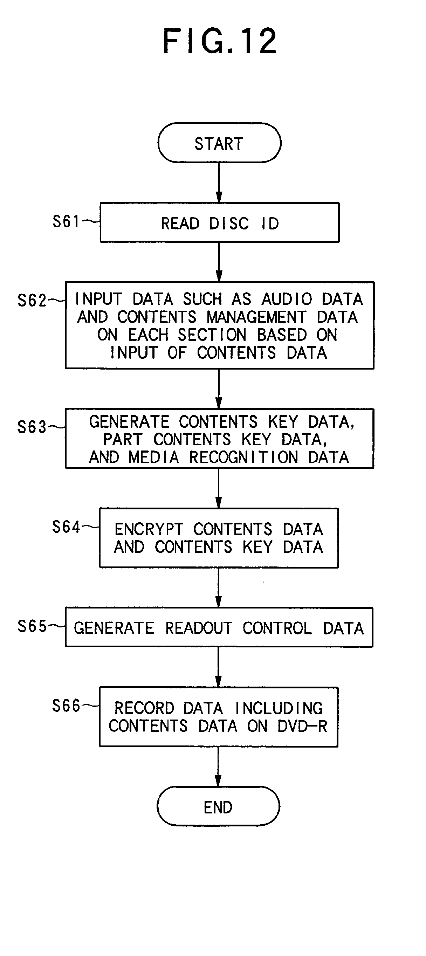

First, a recording operation for recording contents data on the DVD-R will be described with reference to FIG. 11 and FIG.12.

Further, FIG. 11 is a diagram showing processing of the recording operation for recording contents data and a flow of each data according to the present embodiment, and FIG. 12 is a flowchart showing a recording operation for recording contents data according to the present embodiment.

As described above, the contents key data and the media recognition data are generated in the control section 207. As shown in FIG. 11, processing such as encryption and readout control of the recording operation is performed on each data.

First, the flow of the processing of the recording operation and the flow of each data will be described with reference to FIG. 11.

The contents data of FIG. 11 refers to the copyrighted audio data and the copyrighted video data, and the contents data and the contents management data of the audio data and the video data are retrieved from the contents data (original data) inputted to an interface 202.

As shown in FIG. 11, the contents data is encrypted based on the contents key data in the encryption section 204 and is recorded on the recording region 104 on the DVD-R 100. The contents key data is encrypted based on the part contents key data and the media recognition data in the encryption section 204 as in the case of the contents data, and the contents key data is recorded on the recording region 104.

Further, the part contents key data used for encryption of the contents key is recorded on the protect region 106 on the DVD-R 100.

The other hand, the readout control data is generated in the readout control data generating section 205 based on the read identification number of the DVD-R 100 and the inputted contents management data, and is recorded on the protect region 106.

Moreover, the contents management data, which is used for generating readout control data, is recorded on the recording region 104 on the DVD-R 100 with the encrypted contents encryption data. Further, the identification number of the DVD-R 100 is previously recorded on the recording control region 103 on the DVD-R 100.

Next, the recording operation of the recording and reproduction device will be described with reference to FIG. 12.

First, the control section 207 performs a predetermined operation to read the identification number of the DVD-R 100 performing the recording operation (step S61).

Next, when the contents data is inputted to the recording and reproduction device 200, the control section 207 inputs copyrighted audio data and video data of the contents data to the encryption section 204, and the contents management data is inputted to the readout control data generating section 205 and the modulation section 206 (step S62).

Next, the control section 207 generates the contents key data, the part contents key data, and the media recognition data, and outputs generated each data to the encryption section 204 (step S63).

Next, the control section 207 makes the encryption section 204 to the encrypt contents data based on generated contents key data to generate contents encryption data, to encrypt the contents key data based on the part contents key data and the media recognition data to generate contents key encryption data, and to output the contents encryption data and the contents key encryption data to the modulation section 206 (step S64).

The other hand, the control section 207 makes the readout control data generating section 205 generate the readout control data based on the read identification number and the contents management data to output the data to the modulation section 206 (step S65).

For example, in case where only the readout control data is generated on the DVD-R 100, and the contents data has been already recorded on the DVD-R 100, the contents management data is read by a predetermined method in advance, and the readout control data is generated based on the contents management data and the identification number of the DVD-R 100.

Finally, the control section 207 makes the modulation section 206 and the pickup 201 record (rewrite) the readout control data on the protect region 106 in the DVD-R 100, and record the contents encryption data, the contents key encryption data, and the contents management data on the recording region 104 in the DVD-R 100 (step S66).

In this way, in the present embodiment, the encrypted audio data and video data are recorded on the recording region 104, and the readout control data is recorded on the protect region 106.

Additionally, other pieces of data such as text data of the contents data are also recorded on the recording region 104 in the DVD-R 100 by the modulation section 206 and the pickup 201 via the interface 202.

When the contents data is legally moved, the contents data is omitted, and the readout control data is generated based the identification number of the DVD-R 100 and the contents management data expect the omitted the contents data. The generated readout control data is recorded (rewritten) on the DVD-R 100.

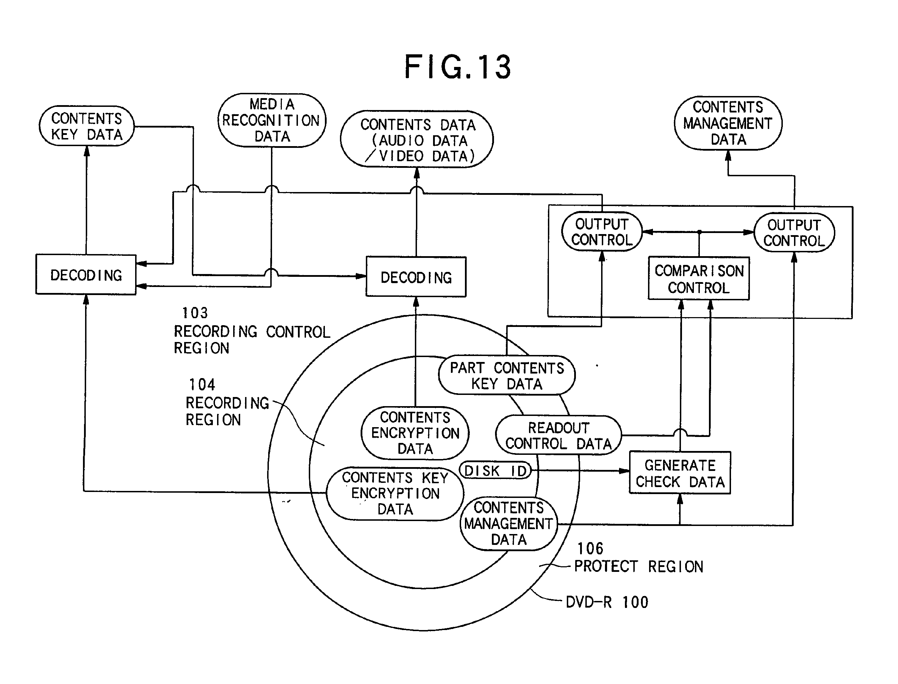

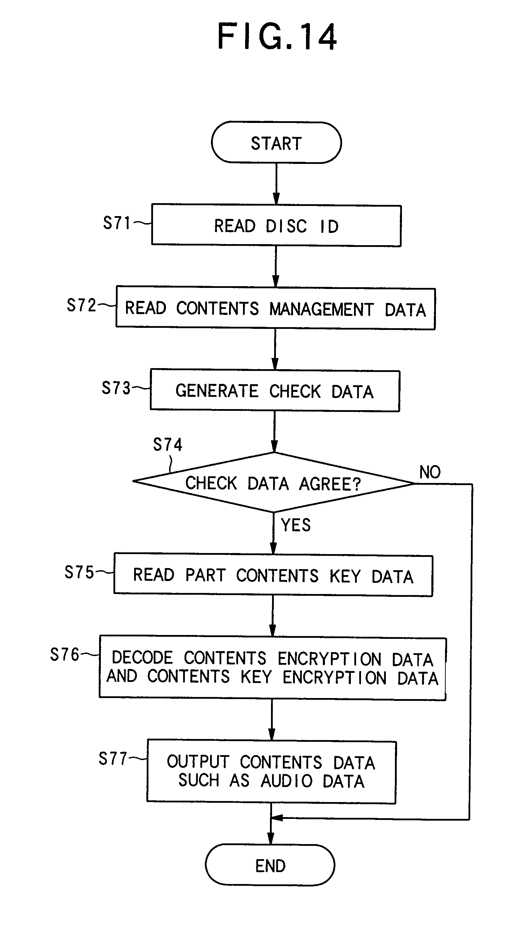

Next, the reproducing operation for reproducing contents data from the DVD-R 100 will be described with reference to FIGS. 13 and FIGS. 14.

FIG. 13 is a diagram showing processing of the reproducing operation for reproducing the contents data and a flow of each data according to the present embodiment, and FIG. 14 is a flowchart showing the reproducing operation for reproducing contents data according to the present embodiment.

First, the flow of the processing of the reproducing operation and the flow of each data will be described with reference to FIG. 13.

As in the case of the explanatory drawing showing the flow of the recording operation, the contents data of FIG. 13 refers to the copyrighted audio data and the copyrighted video data, and the contents data the and contents management data of the audio data and the video data are outputted to predetermined sections.

As shown in FIG. 13, the identification number of the DVD-R 100 and the contents management data are read from the DVD-R 100, and the check data is generated in the readout control section 212 as described above, the check data and the readout control data read from the DVD-R 100 are compared with each other, and reading the part contents key data and the contents management data is controlled.

Moreover, readable contents management data is outputted to the control section 207 as described above. Thus, the contents data reproduced based on copyright data is managed.

In the case where the part contents key data is read when check data and readout control data are in agreement, the part contents key data is used for decoding the contents key encryption data read from the DVD-R 100 together with previously retrieved the media recognition data.

On the other hand, when the contents key encryption data is decoded to contents key data, the contents key data is used for decoding the contents encryption data read from the DVD-R 100.

Further, when the contents encryption data is decoded to contents data, the contents data is outputted to the outside via the decoder 211.

Next, a reproducing operation of the recording and reproduction device will be described with reference to FIG. 14.

First, when the DVD-R 100 is stored in a storage device (not shown), the control section 207 performs a predetermined operation to read the identification number of the DVD-R 100 which is recorded on the recording control region 103 on the DVD-R 100, and output the identification number to the readout control sect ion 212 via the demodulation section 209 (step S71).

Subsequently, in response to an instruction of reproduction performed by a user or automatic reproduction from the control section 207, the control section 207 controls reading the contents management data of contents data to be reproduced, and controls output the data to the readout control section 212 via the demodulation section 209 (step S72).

Next, the control section 207 makes the readout control sections 212 generate the check data based on the identification number in the readout control sect ion 212 and the contents management data (step S73).

Subsequently, the control section 207 makes the readout control section 212 judge whether the readout control data which has been retrieved by the retrieving operation and the generated check data are in agreement or not (step S74).

When the readout control data and the check data are not in agreement, the control section 207 judges that contents data is not legally recorded, discontinues the reproducing operation to complete processing.

At this moment, outputting of the contents management data to the control section 207 is also prohibited.

On the other hand, when the readout control data and the check data are in agreement, the control section 207 makes the readout control section 212 control each section such that the part contents key data is read from the DVD-R 100 and is inputted to the decoding section 210 (step S75).

To be specific, a detection signal is retrieved by the pickup 201, an amplifying operation and a waveform shaping operation is performed on the detection signal by the amplifier 208, and the detection signal is inputted to the decoding section 210.

At this moment, the control section 207 also controls input previously retrieved media recognition data to the decoding section 210, and the control section 207 controls reading the contents key encryption data and the contents encryption data and input the data to the decoding section 210.

Moreover, the contents management data is outputted to the readout control section 212, and is also outputted to the control section 207 or to the outside to manage the contents data to be reproduced.

Next, the control section 207 makes the decoding section 210 decode the contents key encryption data based on inputted part contents key data and the media recognition data to retrieve contents key data, and decode the contents encryption data based on the contents key data (step S76).

Finally, the control section 207 makes the decoding section 210 output the audio data and the video data of decoded contents data via the decoder 211 (step S77).

As described above, according to the present embodiment, the readout control data is generated based on the contents management data and the identification data of the DVD (data recording medium), and readout control data for controlling readout of the contents data when the contents data is reproduced is recorded on a DVD.

Further, the check data generated based on recorded contents management data and recorded identification data of the DVD is compared with the readout control data recorded on the DVD, and when the generated check data and the recorded readout control data are in agreement, the part contents key data is read form the DVD, and encrypted contents key data is decoded based on the part contents key data.

Furthermore, the contents data which is encrypted and recorded on the DVD is decoded based on the contents key data, and is reproduced.

The other hand, when the generated check data and the recorded readout control data are not in agreement, the part contents key, data cannot be retrieved, and contents data cannot be reproduced.

Namely, when the contents data is illicitly recorded and reproduced, the generated check data and the recorded readout control data are not in agreement, and the contents key data cannot be decoded. Thus, encrypted contents data cannot be decoded and the contents data cannot be reproduced.

The other hand, when the contents data is legally recorded and reproduced, the generated check data and the recorded readout control data are in agreement. Thus, because the contents key data is decoded, the encrypted contents data can be decoded and the contents data cannot be reproduced.

Accordingly, when the contents data is reproduced, it is necessary to retrieve legal part contents key data recorded on a protect region of a DVD. Even when contents management data and an identification number of a DVD are retrieved by some unauthorized methods, the contents data cannot be reproduced only by retrieving these data, that is, the contents data cannot be decoded.

Therefore, only in the case of contents data recorded legally, it is possible to reproduce the contents data, thereby protecting copyrighted contents data.

In the present embodiment, the reproducing operation and the recording operation are performed by the recording and reproduction device 200, however, it is also possible to be executed the reproducing and recording operation as a result on which programs for executing the reproduction and recording operations are stored on the recording medium and the programs are read by a computer.

In this case, the recording and reproduction device 300 is provided with the computer, which reads and executes the programs of the reproduction and recording operation, and recording medium in which the programs are stored via a network such as the Internet. As a result, the same effects as those of the above described the recording and reproduction device 300 can be obtained.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A data recording medium (100) **characterized by**:
a reproduction data region (104) for recording reproduction data to be legally reproduced from the data recording medium (100); and
a reproduction auxiliary data region (106) for recording reproduction auxiliary data, which is retrieved based on medium identification data for identifying the data recording medium (100) and identification data of the reproduction data to be legally reproduced and which is used for reproducing the reproduction data when the data recording medium (100) is reproduced.

2. The data recording medium (100) according to claim 1, wherein
said reproduction auxiliary data region (106) is a region for recording the reproduction auxiliary data which is retrieved by generating based on the medium identification data for identifying the data recording medium (100) and the identification data of the reproduction data to be legally reproduced.

3. The data recording medium (100) according to claim 1, wherein
said reproduction auxiliary data region (106) is a region for recording the reproduction auxiliary data which is retrieved by performing readout control using readout control data generated based on the medium identification data and the identification data of the reproduction data when the data recording medium (100) is reproduced.

4. The data recording medium (100) according to claim 3, wherein
said reproduction auxiliary data region (106) is a region for recording at least a part of the reproduction auxiliary data which is different for each data recording medium (100) and each the reproduction data.

5. The data recording medium (100) according to claim 3 or 4, wherein
said reproduction auxiliary data region (106) is a region for recording the readout control data generated based on the medium identification data and data identification data of the reproduction.

6. The data recording medium (100) according to any one of claims 3 to 5, in case where said reproduction auxiliary data region (106) is a region for recording the part reproduction auxiliary data which is different for each data recording medium (100) and each the reproduction data, wherein
said reproduction data region (104) is a region for recording reproduction auxiliary encryption data which is encrypted based on the part reproduction auxiliary data and decoded based on the part reproduction auxiliary data when the data recording medium (100) is reproduced.

7. The data recording medium (100) according to claim 6, wherein
said reproduction data region (104) is a region for recording the reproduction auxiliary encryption data which is encrypted based on at least one of the part reproduction auxiliary data, the medium identification data, identification data of a legal recording apparatus for recording the reproduction data on said data recording medium (100), and identification data of a legal reproduction apparatus for reproducing said data recording medium (100).

8. The data recording medium (100) according to any one of claims 1 to 7, wherein
said reproduction data region (104) is a region for recording the reproduction data which is encrypted by a predetermined method.

9. The data recording medium (100) according to claim 8, wherein
said reproduction auxiliary data region (106) is a region for recording the reproduction auxiliary data which is used for decoding the reproduction data when the reproduction encryption data is reproduced.

10. The data recording medium (100) according to any one of claims 1 to 9, wherein
said reproduction data region (104) is a region for recording the reproduction data which is copyrighted data.

11. The data recording medium (100) according to any one of claims 1 to 10, wherein
said reproduction auxiliary data region (106) is formed on a region which is not reached by unauthorized detecting device.

12. A reproduction apparatus (200) for reproducing reproduction data recorded on an data recording medium (100) providing with a reproduction data region (104) for recording the reproduction data to be legally reproduced from the data recording medium (100) and a reproduction auxiliary data region (106) for recording reproduction auxiliary data, which is retrieved based on medium identification data for identifying the data recording medium (100) and identification data of the reproduction data to be legally reproduced and which is used for reproducing the reproduction data when the recording medium is reproduced, said reproduction apparatus (200) **characterized by**:
a identification data acquiring device (210) for acquiring the identification data of reproduction data reproduced by said reproduction apparatus (200) and the medium identification data of the data recording medium (100) reproduced by said reproduction apparatus (200);
a generating device (212, 302) for generating readout control data for controlling readout of the reproduction data based on the acquired identification data of reproduction data and the acquired medium identification data;
a reproduction auxiliary data retrieving device for retrieving the reproduction auxiliary data recorded on a reproduction auxiliary region in the data recording medium (100); and
a reproduction control device (201, 207, 210, 211) for controlling reproduction of the reproduction data recorded on the data recording medium (100) based on the generated readout control data and the retrieved reproduction auxiliary data.

13. The reproduction apparatus (200) according to claim 12, in case where said reproduction auxiliary data region (106) is a region for recording the reproduction auxiliary data which is generated based on the medium identification data and the identification data of reproduction data when the reproduction data is recorded on the data recording medium (100), wherein
said reproducing control device (207) comprises:
a comparing device (212) for comparing the readout control data generated by the generating device (212, 302) and the reproduction auxiliary data retrieved from the data recording medium (100) by the reproduction auxiliary data retrieving device; and
a control device (207) for controlling reproduction of the reproduction data recorded on the data recording medium (100) only when the generated readout control data and the retrieved reproduction auxiliary data of the data recording medium (100) are in agreement.

14. The reproduction apparatus (200) according to claim 12, in case where said reproduction auxiliary data region (106) is a region for recording at least a part of the reproduction auxiliary data and readout control data, which is generated based on the medium identification for identifying the data recording medium (100) and the identification data of the reproduction data to be legally reproduced and which is controlling readout of the reproduction auxiliary data, said reproduction apparatus (200) further comprising:
a readout control data retrieving device (212) for retrieving record readout control data recorded on said reproduction auxiliary data region (106) in the data recording medium (100) reproduced by said reproduction apparatus (200); and
a comparing device (212) for comparing the retrieved record readout control data and generation readout control data which is the readout control data generated by said generating device (212, 302),
wherein said reproduction auxiliary data retrieving device retrieves the reproduction auxiliary data from the data recording medium (100) when the generation readout control data and the record readout control data are in agreement, and
said reproduction control device (201, 207, 210, 211) controls reproduction of the reproduction data recorded on the data recording medium (100) based on the retrieved reproduction auxiliary data.

15. The reproduction apparatus (200) according to claim 14, in case where said reproduction auxiliary data region (106) is a region for recording part reproduction auxiliary data which is the part of the reproduction auxiliary data, wherein
said reproduction auxiliary data retrieving device retrieves the part reproduction auxiliary data and the reproduction auxiliary data by generating based on the retrieved part reproduction auxiliary data after the part of the reproduction auxiliary data.

16. The reproduction apparatus (200) according to claim 15, in case where said reproduction data region (104) is a region for recording the reproduction auxiliary data encrypted by the part reproduction auxiliary data, wherein
said reproduction auxiliary data retrieving device retrieves reproduction auxiliary encryption data, which is the encrypted reproduction auxiliary data, from the data recording medium (100) and decodes the reproduction auxiliary encryption data based on the retrieved part reproduction auxiliary data for generating the reproduction auxiliary data.

17. The reproduction apparatus (200) according to claim 16, in case where said reproduction data region (104) is a region for recording the reproduction auxiliary data which is encrypted, wherein
said reproduction auxiliary data retrieving device generates the reproduction auxiliary data by decoding the reproduction auxiliary encryption data based on at least one of the part reproduction auxiliary data, the medium identification data and the identification data of said reproduction apparatus (200).

18. The reproduction apparatus (200) according to any one of claims 12 to 16, in case where said the reproducing data region is a region for recording the reproduction encryption data which is the reproduction data encrypted by using a predetermined method, wherein
said reproduction control device (201, 207, 210, 211) comprises a decoding device (210) for decoding the reproduction encryption data based on the reproduction auxiliary data retrieved by said reproduction auxiliary data retrieving device.

19. The reproduction apparatus (200) according to any one of claims 12 to 18, wherein
said reproduction auxiliary data retrieving device retrieves the reproduction auxiliary data recorded on said reproduction auxiliary region only when the reproduction data is legally recorded on the data recording medium (100).

20. A recording apparatus for recording reproduction data recorded on a data recording medium (100) providing with a reproduction data region (104) for recording the reproduction data to be legally reproduced from the data recording medium (100) and a reproduction auxiliary data region (106) for recording reproduction auxiliary data which is used for reproducing the reproduction data when the recording medium is reproduced, said recording apparatus **characterized by**:
a first identification data acquiring device (202) for acquiring the identification data of the reproduction data which is recorded in said data recording;
a second identification data acquiring device (202) for acquiring the identification data of said data recording medium (100) which is reproduced;
a reproduction data acquiring device (202, 205) for acquiring the reproduction data;
a reproduction auxiliary data acquiring device (212) for acquiring reproduction auxiliary data based on the acquired medium identification data and the acquired identification data of the reproduction data; and
a recording device (201, 204, 206) for recording the acquired reproduction data in said reproduction data region (104), the acquired reproduction auxiliary data in said reproduction auxiliary data region (106), and the acquired medium identification data and the acquired identification data of the reproduction data on a region in said data recording medium (100).

21. The recording apparatus according to claim 20, wherein
said reproduction auxiliary data acquiring device (212) comprises a generating device (205, 301) for generating the reproduction auxiliary data based on the acquired identification data of the reproduction data and the acquired medium identification data, and
said recording device (201, 204, 206) records the generated reproduction auxiliary data in said reproduction auxiliary data region (106).

22. The recording apparatus according to claim 21, wherein
said recording device (201, 204, 206) comprises an encryption device for encrypting the acquired reproduction data by a predetermined method.

23. The recording apparatus according to claim 20, in case where said reproduction data region (104) is a region for recording the reproduction data which is decoded from said recording medium for being legally reproduced and which is encrypted, and said reproduction auxiliary data region (106) is a region for recording the reproduction auxiliary data performed readout control using readout control data, further comprising:
a generating device (205, 301) for generating the readout control data, which is a data for controlling reading the reproduction auxiliary data when the recording medium is reproduced, based on the acquired identification data of reproduction data and the acquired medium identification data, and
an encryption device (204) for encrypting the reproduction data based on at least part of the reproduction auxiliary data, and
wherein said recording device (201, 204, 206) records the encrypted reproduction data on said reproduction data region (104), the reproduction auxiliary data on said reproduction auxiliary data region (106) and the readout control data on a region in said data recording medium (100).

24. The recording apparatus according to claim 23, wherein
said recording device (201, 204, 206) records reproduction auxiliary encryption data which is encrypted based on the part of the reproduction auxiliary data on said reproduction auxiliary data region( 106).

25. The recording apparatus according to claim 24, wherein
said recording device (201, 204, 206) records the reproduction auxiliary encryption data which is encrypted based on at least one of the part of the reproduction auxiliary data, the medium identification data and identification data of a legal reproduction apparatus for reproducing said data recording medium (100).

26. A reproducing method for reproducing reproduction data recorded on an data recording medium (100) providing with a reproduction data region (104) for recording the reproduction data to be legally reproduced from the data recording medium (100) and a reproduction auxiliary data region (106) for recording reproduction auxiliary data, which is retrieved based on medium identification data for identifying the data recording medium (100) and identification data of the reproduction data to be legally reproduced and which is used for reproducing the reproduction data when the recording medium is reproduced, said reproducing method **characterized by**:
a identification data acquiring process of acquiring the identification data of reproduction data reproduced by said reproduction apparatus (200) and the medium identification data of the data recording medium (100) reproduced by said reproduction apparatus (200);
a generating process of generating readout control data for controlling readout of the reproduction data based on the acquired identification data of reproduction data and the acquired medium identification data;
a reproduction auxiliary data retrieving process of retrieving the reproduction auxiliary data recorded on a reproduction auxiliary region in the data recording medium (100); and
a reproduction process of reproducing of the reproduction data recorded on the data recording medium (100) based on the generated readout control data and the retrieved reproduction auxiliary data.

27. The reproducing method according to claim 26, in case where said reproduction auxiliary data region (106) is a region for recording the reproduction auxiliary data which is generated based on the medium identification data and the identification data of reproduction data when the reproduction data is recorded on the data recording medium (100), wherein
said reproducing control process comprises:
a comparing process of comparing the readout control data generated by the generating process and the reproduction auxiliary data retrieved from the data recording medium (100) by the reproduction auxiliary data retrieving process; and
a data reproduction process of controlling reproduction of the reproduction data recorded on the data recording medium (100) only when the generated readout control data and the retrieved reproduction auxiliary data of the data recording medium (100) are in agreement.

28. The reproducing method according to claim 26, in case where said reproduction auxiliary data region (106) is a region for recording at least a part of the reproduction auxiliary data and readout control data, which is generated based on the medium identification for identifying the data recording medium (100) and identification data of the reproduction data to be legally reproduced and which is controlling readout of the reproduction auxiliary data, said reproducing method further comprising:
a readout control data retrieving process of retrieving record readout control data recorded on said reproduction auxiliary data region (106) in the data recording medium (100) reproduced by a reproduction apparatus (200); and
a comparing process of comparing the retrieved record readout control data and generation readout control data which is the readout control data generated by said generating process,
wherein in said reproduction auxiliary data retrieving process, the reproduction auxiliary data is retrieved from the data recording medium (100) when the generation readout control data and the record readout control data are in agreement, and
In said reproduction control process, reproduction of the reproduction data recorded on the data recording medium (100) based on the retrieved reproduction auxiliary data is controlled.

29. A recording method for recording reproduction data recorded on an data recording medium (100) providing with a reproduction data region (104) for recording the reproduction data to be legally reproduced from the data recording medium (100) and a reproduction auxiliary data region (106) for recording reproduction auxiliary data which is used for reproducing the reproduction data when the recording medium is reproduced, said recording method **characterized by**:
a first identification data acquiring process of acquiring the identification data of the reproduction data which is recorded in said data recording;
a second identification data acquiring process of acquiring the identification data of said data recording medium (100) which is reproduced;
a reproduction data acquiring process of acquiring the reproduction data;
a reproduction auxiliary data acquiring process of acquiring reproduction auxiliary data based on the acquired medium identification data and the acquired identification data of the reproduction data; and
a recording process of recording the acquired reproduction data in said reproduction data region (104), the acquired reproduction auxiliary data in said reproduction auxiliary data region (106), and the acquired medium identification data and the acquired identification data of the reproduction data on a region in said data recording medium (100).

30. The recording method according to claim 29, wherein
said reproduction auxiliary data acquiring process comprises a generating process of generating the reproduction auxiliary data based on the acquired identification data of the reproduction data and the acquired medium identification data, and
in said recording process, the generated reproduction auxiliary data is recorded in said reproduction auxiliary data region (106).

31. The recording method according to claim 29, in case where said reproduction data region (104) is a region for recording the reproduction data which is decoded from said recording medium for being legally reproduced and which is encrypted, and said reproduction auxiliary data region (106) is a region for recording the reproduction auxiliary data performed readout control using readout control data, further comprising:
a generating process of generating the readout control data, which is a data for controlling reading the reproduction auxiliary data when the recording medium is reproduced, based on the acquired identification data of reproduction data and the acquired medium identification data, and
an encryption process of encrypting the reproduction data based on at least part of the reproduction auxiliary data,
wherein in said recording process, the encrypted reproduction data is recorded on said reproduction data region (104), the reproduction auxiliary data is recorded on said reproduction auxiliary data region (106) ,and the readout control data is recorded on a region in said data recording medium (100).

32. A recording medium wherein a reproduction program is recorded so as to be read by a computer, the computer included in a reproduction apparatus (200) (200) for reproducing reproduction data recorded on an data recording medium (100) providing with a reproduction data region (104) for recording the reproduction data to be legally reproduced from the data recording medium (100) and a reproduction auxiliary data region (106) for recording reproduction auxiliary data, which is retrieved based on medium identification data for identifying the data recording medium (100) and identification data of the reproduction data to be legally reproduced and which is used for reproducing the reproduction data when the recording medium is reproduced, **characterized in that** the program causes the computer to function as:
a identification data acquiring device (210) for acquiring the identification data of reproduction data reproduced by said reproduction apparatus (200) and the medium identification data of the data recording medium (100) reproduced;
a generating device (212, 302) for generating readout control data for controlling readout of the reproduction data based on the acquired identification data of reproduction data and the acquired medium identification data;
a reproduction auxiliary data retrieving device for retrieving the reproduction auxiliary data recorded on a reproduction auxiliary region in the data recording medium (100); and
a reproduction control device (201, 207, 210, 211) for controlling reproduction of the reproduction data recorded on the data recording medium (100) based on the generated readout control data and the retrieved reproduction auxiliary data.

33. The recording medium according to claim 32, in case where said reproduction auxiliary data region (106) is a region for recording the reproduction auxiliary data which is generated based on the medium identification data and the identification data of reproduction data when the reproduction data is recorded on the data recording medium (100), wherein the program further causes the computer to function as:
said reproducing control device (207) comprises:
a comparing device (212) for comparing the readout control data generated by the generating device (212, 305) and the reproduction auxiliary data retrieved from the data recording medium (100) by the reproduction auxiliary data retrieving device; and
a control device (207) for controlling reproduction of the reproduction data recorded on the data recording medium (100) only when the generated readout control data and the retrieved reproduction auxiliary data of the data recording medium (100) are in agreement.

34. The recording medium according to claim 32, in case where said reproduction auxiliary data region (106) is a region for recording at least a part of the reproduction auxiliary data and readout control data, which is generated based on the medium identification for identifying the data recording medium (100) and identification data of the reproduction data to be legally reproduced and which is controlling readout of the reproduction auxiliary data, wherein the program further causes the computer to function as:
a readout control data retrieving device (212) for retrieving record readout control data recorded on said reproduction auxiliary data region (106) in the data recording medium (100) reproduced by said reproduction apparatus (200);
a comparing device (212) for comparing the retrieved record readout control data and generation readout control data which is the readout control data generated by said generating device (212, 302);
said reproduction auxiliary data retrieving device for retrieving the reproduction auxiliary data from the data recording medium (100) when the generation readout control data and the record readout control data are in agreement; and
said reproduction control device (201, 207, 210, 211) for controlling reproduction of the reproduction data recorded on the data recording medium (100) based on the retrieved reproduction auxiliary data.

35. A recording medium wherein a recording program is recorded so as to be read by a computer, the computer included in a recording apparatus for recording reproduction data recorded on an data recording medium (100) providing with a reproduction data region (104) for recording the reproduction data to be legally reproduced from the data recording medium (100) and a reproduction auxiliary data region (106) for recording reproduction auxiliary data which is used for reproducing the reproduction data when the recording medium is reproduced, **characterized in that** the program causes the computer to function as:
a first identification data acquiring device (202) (210) for acquiring the identification data of the reproduction data which is recorded in said data recording;
a second identification data acquiring device (202) (210) for acquiring the identification data of said data recording medium (100) which is reproduced;
a reproduction data acquiring device (202, 205) for acquiring the reproduction data;
a reproduction auxiliary data acquiring device (212) for acquiring reproduction auxiliary data based on the acquired medium identification data and the acquired identification data of the reproduction data; and
a recording device (201, 204, 206) for recording the acquired reproduction data in said reproduction data region (104), the acquired reproduction auxiliary data in said reproduction auxiliary data region (106), and the acquired medium identification data and the acquired identification data of the reproduction data on a region in said data recording medium (100).

36. The recording medium according to claim 35, the program causing the computer to function as:
said reproduction auxiliary data acquiring device (212) for comprising a generating device (205, 301) for generating the reproduction auxiliary data based on the acquired identification data of the reproduction data and the acquired medium identification data, and
said recording device (201, 204, 206) for recording the generated reproduction auxiliary data in said reproduction auxiliary data region (106).

37. The recording medium according to claim 35, in case where said reproduction data region (104) is a region for recording the reproduction data which is decoded from said recording medium for being legally reproduced and which is encrypted, and said reproduction auxiliary data region (106) is a region for recording the reproduction auxiliary data performed readout control using readout control data, the program causing the computer to function as:
a generating device (205, 301) for generating the readout control data, which is a data for controlling reading the reproduction auxiliary data when the recording medium is reproduced, based on the acquired identification data of reproduction data and the acquired medium identification data; and
an encryption device (204) for encrypting the reproduction data based on at least part of the reproduction auxiliary data,
said recording device (201, 204, 206) for recording the encrypted reproduction data on said reproduction data region (104), the reproduction auxiliary data on said reproduction auxiliary data region (106) and the readout control data on a region in said data recording medium (100).
